(19) Europäisches Patentamt
European Patent Office
Office européen des brevets

(11) EP 4 468 702 A1

(12) EUROPEAN PATENT APPLICATION
published in accordance with Art. 153(4) EPC

(43) Date of publication:
27.11.2024 Bulletin 2024/48

(21) Application number: 22931860.5

(22) Date of filing: 14.12.2022

(51) International Patent Classification (IPC):
H04N 19/154 (2014.01)

(52) Cooperative Patent Classification (CPC):
H04N 19/154; H04N 19/176; H04N 19/20

(86) International application number:
PCT/CN2022/138979

(87) International publication number:
WO 2023/173852 (21.09.2023 Gazette 2023/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.03.2022 CN 202210255919

(71) Applicant: Huawei Technologies Co., Ltd.
Shenzhen, Guangdong 518129 (CN)

(72) Inventors:
• CHEN, Shaolin
  Shenzhen, Guangdong 518129 (CN)
• MENG, Lin
  Shenzhen, Guangdong 518129 (CN)
• ZHANG, Yixuan
  Shenzhen, Guangdong 518129 (CN)

(74) Representative: Pfenning, Meinig & Partner mbB
Patent- und Rechtsanwälte
Theresienhöhe 11a
80339 München (DE)

(54) IMAGE ENCODING METHOD AND APPARATUS, AND DEVICE

(57) This application discloses an image encoding method, apparatus, and device, to ensure quality of an encoded image. This method includes: After obtaining a first image, an encoding device may obtain a first QP corresponding to each coding block in at least one coding block in the first image; and then encode each coding block in the at least one coding block based on the first QP corresponding to each coding block, to obtain first image data. The encoding device may determine, based on a quality parameter of each coding block in the first image data, a second QP corresponding to each coding block; and encode each coding block in the at least one coding block based on the second QP corresponding to each coding block, to obtain second image data. According to this method, the encoding device may adjust an encoding parameter QP of current encoding based on actual quality of previous encoding, to ensure quality of an encoded image.

S301: Obtain a first image

S302: Obtain a first QP corresponding to each coding block in at least one coding block in the first image

S303: Encode each coding block in the at least one coding block based on the first QP corresponding to each coding block

S304: Determine, based on a quality parameter of each coding block in first image data, a second QP corresponding to each coding block

S305: Encode each coding block in the at least one coding block based on the second QP corresponding to each coding block

S306: Store second information

S307: Obtain a second image

S308: Determine, in the at least one coding block in the first image, at least one target coding block associated with a fourth coding block in the second image

S309: Determine a quality parameter of at least one target coding block in second image data based on the second information

S310: Predict a quality parameter of an encoded fourth coding block based on the quality parameter of the at least one target coding block

S311: Determine, based on the predicted quality parameter of the encoded fourth coding block, a third QP corresponding to the fourth coding block

S312: Encode the fourth coding block based on the third QP corresponding to the fourth coding block

FIG. 3

**Description**

**CROSS-REFERENCE TO RELATED APPLICATIONS**

This application claims priority to Chinese Patent Application No. 202210255919.X, filed with the China National Intellectual Property Administration on March 15, 2022 and entitled "IMAGE ENCODING METHOD, APPARATUS, AND DEVICE", which is incorporated herein by reference in its entirety.

**TECHNICAL FIELD**

This application relates to the image field, and in particular, to an image encoding method, apparatus, and device.

**BACKGROUND**

With the development of information technologies, images and videos become main components of digital information content. To facilitate transmission, an image or a video need to be better compressed and encoded, so that space occupied by the image or the video is smaller and subjective effect is better. Currently, this goal can be achieved in the following two aspects.

In one aspect, a more complex encoding tool is studied to improve prediction accuracy (for example, enhance more prediction modes), energy concentration of a transform (for example, a more flexible transform), and the like, to improve a video compression rate. Major video coding standard organizations (for example, moving picture experts group-advanced video coding (moving picture experts group-advanced video coding, MPEG-AVC), high efficiency video coding (high efficiency video coding, HEVC), and audio video coding standard (audio video coding standard, AVS) 1/2/3) have been working on this aspect.

In another aspect, in a standard framework, subjective and objective effect of encoding is improved based on a human visual system (human visual system, HVS) feature in a video compression process. For example, a bit rate is allocated based on texture strength, edge strength, luminance, a time-domain feature, or the like by using an adaptive quantization (adaptive quantization, AQ) technology. When the bit rate is fixed, better quality of an encoded image is achieved.

In a current encoding method, an encoder pre-determines a quantization parameter (quantization parameter, QP) used for encoding, and allocates a bit rate by using the QP. However, quality of an encoded image relates to many factors. If the encoder performs encoding by using the pre-determined QP, quality of an encoded image may be unsatisfactory, and quality of different regions in the encoded image may be greatly different.

Therefore, an image encoding solution that can ensure quality of an encoded image is needed in this field.

**SUMMARY**

This application provides an image encoding method, apparatus, and device, to ensure quality of an encoded image.

According to a first aspect, this application provides an image encoding method. This method includes: After obtaining a first image, an encoding device may obtain a first QP corresponding to each coding block in at least one coding block in the first image; and then encode each coding block in the at least one coding block based on the first QP corresponding to each coding block, to obtain first image data. The encoding device may determine, based on a quality parameter of each coding block in the first image data, a second QP corresponding to each coding block; and encode each coding block in the at least one coding block based on the second QP corresponding to each coding block, to obtain second image data.

According to this method, the encoding device may encode an image at least twice, adjust a QP of a corresponding coding block based on a quality parameter of each coding block obtained through previous encoding, and then encode the image based on an adjusted QP. In this way, the encoding device can adjust an encoding parameter QP of current encoding based on actual quality of previous encoding, to ensure quality of an encoded image.

In a possible design, for any coding block (referred to as a first coding block below) in the at least one coding block, the encoding device may determine, based on a target quality parameter of the first image and a quality parameter of the first coding block in the first image data, a first QP offset value corresponding to the first coding block; and then determine, based on a first QP corresponding to the first coding block and the first QP offset value corresponding to the first coding block, a second QP corresponding to the first coding block. According to this design, the encoding device may first determine the first QP offset value corresponding to the first coding block, and then determine, based on the first QP offset value corresponding to the first coding block, the second QP corresponding to the first coding block. Generally, in comparison with the second QP, the first QP offset value is small. In this case, a calculation amount for determining the first QP offset value is small, and fewer resources are needed for performing transmission or storage of the first QP offset value.

In a possible design, the encoding device may determine, in the following manner, the first QP offset corresponding to the first coding block.

When the quality parameter of the first coding block is greater than the target quality parameter of the first image, and a difference between the quality parameter of the first coding block and the target quality parameter of the first image falls within a first range, the encoding device may determine that the first QP offset value corresponding to the first coding block is equal to a QP offset value corresponding to the first range. The first QP offset value corresponding to the first coding block is a positive number.

Alternatively, when the quality parameter of the first coding block is less than the target quality parameter of the first image, and an absolute value of a difference between the quality parameter of the first coding block and the target quality parameter of the first image falls within a second range, the encoding device may determine that an absolute value of the first QP offset value corresponding to the first coding block is equal to a QP offset value corresponding to the second range. The first QP offset value corresponding to the first coding block is a negative number.

Alternatively, when the quality parameter of the first coding block is equal to the target quality parameter of the first image, the encoding device may determine that the first QP offset value corresponding to the first coding block is 0.

According to this design, when encoding quality of a coding block in the first image is lower than target quality of the first image, the first QP offset value is a negative value. Therefore, the encoding quality of the coding block may be improved by decreasing a QP, so that the encoding quality of the coding block is close to the target quality. When the encoding quality of the coding block in the first image is higher than the target quality of the first image, the first QP offset value is a positive value. Therefore, the encoding quality of the coding block may be reduced by increasing the QP, so that the encoding quality is close to the target quality. In this way, when a target bit rate is constant, the encoding device may allocate a bit rate inside the first image, in other words, reduce a bit rate of a coding block whose encoding quality is higher than the target quality, and allocate a saved codeword to a coding block whose encoding quality is lower than the target quality, to improve a bit rate of the coding block whose encoding quality is lower than the target quality. Therefore, overall encoding quality of the first image may be improved, and the encoding quality of the first image may be more balanced. When the target bit rate is variable, in this design, a bit rate needed by an entire image may be reduced by reducing quality of a coding block whose encoding quality exceeds the target quality.

In a possible design, after encoding each coding block in the at least one coding block based on the first QP corresponding to each coding block, the encoding device may compare the first image data with the first image, to obtain the quality parameter of each coding block in the first image data. According to this design, the encoding device can accurately determine the quality parameter of each coding block after each coding block in the at least one coding block is encoded by using the first QP corresponding to each coding block.

In a possible design, for any coding block (referred to as a second coding block below) in the at least one coding block, the encoding device may encode the second coding block based on a first QP corresponding to the second coding block in the following manner.

The encoding device may perform quantization processing on a second coding block based on a first QP corresponding to the second coding block, to obtain quantized data. The encoding device may perform inverse quantization and inverse transform processing on the quantized data based on the first QP corresponding to the second coding block, to obtain inverse transformed residual data. Then, the encoding device may obtain reconstructed data of the second coding block based on prediction data and residual data of the second coding block, and filter the reconstructed data, to obtain image data that is in the first image data and that corresponds to the second coding block.

According to this design, when each coding block in the at least one coding block is encoded based on the first QP corresponding to each coding block, it is sufficient to determine first image data used for next encoding, and no bitstream needs to be output. Therefore, encoding efficiency can be improved.

In a possible design, for any coding block (referred to as a third coding block below) in the at least one coding block, the encoding device may encode the third coding block based on first information and a second QP corresponding to the third coding block. The first information may be intermediate data obtained when the third coding block is encoded based on a first QP corresponding to the third coding block. For example, the first information may include at least one of the following: a prediction mode that is of the third coding block and that is determined when the third coding block is encoded based on a first QP corresponding to the third coding block, and a motion vector that is of the third coding block and that is determined when the third coding block is encoded based on the first QP corresponding to the third coding block. According to this design, when each coding block in the at least one coding block is encoded based on the second QP corresponding to each coding block, an intermediate result obtained by encoding each coding block in the at least one coding block based on the first QP corresponding to each coding block may be reused. In other words, an intermediate result of previous encoding may be reused in current encoding, so that an encoding procedure can be simplified, and the encoding efficiency can be improved.

In a possible design, after encoding each coding block in the at least one coding block based on the second QP corresponding to each coding block, the encoding device may store second information. The second information may indicate a quality parameter of each coding block in the second image data.

Optionally, the second information may be a matrix including the quality parameter of each coding block in the second image data.

According to this design, after encoding the first image, the encoding device may store the second information indicating the quality parameter of each coding block in the second image data. In this way, when encoding a subsequent image in a video to which the first image belongs, the encoding device may refer to the second information, so that encoding quality of the subsequent image can be improved.

In a possible design, the first image may be an $n^{th}$ frame of image in a video, where n is a positive integer. After storing the second information, the encoding device may encode the subsequent image in the video based on the second information of the first image. Specifically, the encoding device may obtain an $(n+1)^{th}$ frame of image (referred to as a second image below) in the video. The second image includes N coding blocks, and N is a positive integer. The encoding device may determine, in the at least one coding block in the first image, at least one target coding block associated with a fourth coding block in the second image. The fourth coding block may be any coding block in the N coding blocks, and content in the fourth coding block is included in the at least one target coding block. After determining a quality parameter of the at least one target coding block in the second image data based on the second information, the encoding device may predict a quality parameter of an encoded fourth coding block based on the quality parameter of the at least one target coding block, and determine, based on the quality parameter, a third QP corresponding to the fourth coding block. Then, the encoding device may encode the fourth coding block based on the third QP corresponding to the fourth coding block.

According to this design, the encoding device may encode the first image in the video at least twice, to improve the encoding quality of the first image. Then, the encoding device may encode the second image in the video once based on the first image whose encoding quality is already improved. Specifically, the encoding device predicts encoding quality of a similar coding block in the subsequent image in the video based on encoding quality of a target coding block in the first image whose encoding quality is already improved, and adjusts a QP based on the predicted encoding quality, so that the encoding quality of the similar coding block in the subsequent image in the video can be improved, and encoding quality of the second image can be improved.

In a possible design, after determining, based on a target quality parameter of the second image and a predicted quality parameter of the encoded fourth coding block, a second QP offset value corresponding to the fourth coding block, the encoding device may determine, based on the second QP offset value corresponding to the fourth coding block, a third QP corresponding to the fourth coding block. According to this design, the encoding device may first determine the second QP offset value corresponding to the fourth coding block, and then determine, based on the second QP offset value corresponding to the fourth coding block, the third QP corresponding to the fourth coding block. Generally, in comparison with the third QP, the second QP offset is small. In this case, a calculation amount for determining the second QP offset value is small, and fewer resources are needed for performing transmission or storage of the second QP offset value.

In a possible design, the encoding device may determine, in the following manner, the second QP offset value corresponding to the fourth coding block.

When the quality parameter of the fourth coding block is greater than the target quality parameter of the second image, and a difference between the quality parameter of the fourth coding block and the target quality parameter of the second image falls within a third range, the encoding device may determine that the second QP offset value corresponding to the fourth coding block is equal to a QP offset value corresponding to the third range. The second QP offset value corresponding to the fourth coding block is a positive number.

Alternatively, when the quality parameter of the fourth coding block is less than the target quality parameter of the second image, and an absolute value of a difference between the quality parameter of the fourth coding block and the target quality parameter of the second image falls within a fourth range, the encoding device may determine that an absolute value of the second QP offset value corresponding to the fourth coding block is equal to a QP offset value corresponding to the fourth range. The second QP offset value corresponding to the fourth coding block is a negative number.

Alternatively, when the predicted quality parameter of the encoded fourth coding block is equal to the target quality parameter of the second image, the encoding device may determine that the second QP offset value corresponding to the fourth coding block is 0.

According to this design, when quality of a coding block in the second image is lower than target quality of the second image, the second QP offset value is a negative value. Therefore, the encoding quality of the coding block may be improved by decreasing the QP. When the quality of the coding block in the second image is higher than the target quality of the first image, the second QP offset is a positive value. Therefore, a bit rate needed by the coding block may be reduced by increasing the QP, and a saved bit rate may be used to improve encoding quality of a coding block that is in the second image and whose quality is lower than the target quality of the second image. In this way, overall encoding quality of the second image can be improved without increasing an overall bit rate.

In a possible design, a quality parameter of any coding block includes at least one of the following: a peak signal to noise ratio, a structure similarity, or a multi-scale structure similarity.

According to a second aspect, an image encoding apparatus is provided, including units configured to perform the steps according to any one of the first aspect and the possible designs of the first aspect.

According to a third aspect, an image encoding device is provided, including a processor and a memory coupled to the processor. The memory may be configured to store program code. The processor may invoke the program code stored in the memory to perform the method according to any one of the first aspect and the possible designs of the first aspect.

According to a fourth aspect, an embodiment of this application further provides a computer program. When the computer program is run on a computer, the computer is enabled to perform the method according to any one of the first aspect and the possible designs of the first aspect.

According to a fifth aspect, an embodiment of this application further provides a computer-readable storage medium. The computer-readable storage medium stores a computer program. When the computer program is executed by a computer, the computer is enabled to perform the method according to any one of the first aspect and the possible designs of the first aspect.

According to a sixth aspect, an embodiment of this application further provides a chip. The chip is configured to read a computer program stored in a memory, to perform the method according to any one of the first aspect and the possible designs of the first aspect.

According to a seventh aspect, an embodiment of this application further provides a chip system. The chip system includes a processor, configured to support a computer apparatus in implementing the method according to any one of the first aspect and the possible designs of the first aspect. In a possible design, the chip system further includes a memory, and the memory is configured to store a program and data that are necessary for the computer apparatus. The chip system may include a chip, or may include a chip and another discrete component.

For technical effects that can be achieved in any one of the second aspect to the seventh aspect, refer to descriptions of the technical effects that can be achieved in any one of the first aspect and the possible designs of the first aspect. Repeated parts are not described.

## BRIEF DESCRIPTION OF DRAWINGS

FIG. 1 is a diagram of a structure of an encoding device;
FIG. 2 is a diagram of an AQ solution;
FIG. 3 is a flowchart of an image encoding method according to an embodiment of this application;
FIG. 4 is a diagram of a structure of an encoding device according to an embodiment of this application;
FIG. 5 is a diagram of a processing procedure of a QP adjustment module 33 according to an embodiment of this application;
FIG. 6 is a diagram of another processing procedure of a QP adjustment module 33 according to an embodiment of this application;
FIG. 7 is a diagram of a structure of another encoding device according to an embodiment of this application;
FIG. 8 is a diagram of a structure of a predictive encoding module 41 according to an embodiment of this application;
FIG. 9 is a diagram of an encoding method according to an embodiment of this application;
FIG. 10 is a diagram of a structure of another encoding device according to an embodiment of this application;
FIG. 11 is a diagram of a processing procedure of a QP calculation module 116 according to an embodiment of this application;
FIG. 12 is a diagram of a coding block association relationship according to an embodiment of this application;
FIG. 13 is a diagram of a structure of an image encoding apparatus according to an embodiment of this application; and
FIG. 14 is a diagram of a structure of an image encoding device according to an embodiment of this application.

## DESCRIPTION OF EMBODIMENTS

This application provides an image encoding method, apparatus, and device, to ensure quality of an encoded image. The method, the apparatus, and the device are based on a same technical concept. Because problem-resolving principles are similar, mutual reference may be made to implementations of the apparatus, the device, and the method. Repeated parts are not described again.

According to a solution provided in embodiments of this application, after obtaining a first image, an encoding device may obtain a first QP corresponding to each coding block in at least one coding block in the first image, and then encode (referred to as first encoding below) each coding block in the at least one coding block based on the first QP corresponding to each coding block, to obtain first image data. The encoding device determines, based on a quality parameter of each coding block in the first image data, a second QP corresponding to each coding block; and encodes each coding block in the at least one coding block based on the second QP corresponding to each coding block, to obtain second image data. According to the solution, the encoding device may encode an image at least twice, adjust a QP of a corresponding coding block based on a quality parameter of each coding block obtained through previous encoding, and then encode the image based on an adjusted QP. In this way, the encoding device can adjust a QP of current encoding based on quality of previous encoding, to ensure quality of a current encoded image.

The following describes some terms in embodiments of this application, to facilitate understanding of a person skilled in the art.

(1) Image coding usually includes processing (for example, through compressing) an original image to reduce an amount of data needed for representing the image, so that the image or information included in the image is represented by using a smaller quantity of bits, for more efficient storage and/or transmission.

(2) Video coding usually refers to processing an image sequence that forms a video or a video sequence. Video coding usually includes processing (for example, through compressing) an original video image to reduce an amount of data needed for representing the video image, for more efficient storage and/or transmission. In the field of video coding, the terms "picture (picture)", "frame (frame)", or "image (image)" may be used as synonyms.

(3) A block (block) is a processing unit for image coding or video coding, and is also referred to as an image block.

Each image may include at least one block. In some video coding standards, the block is further extended. For example, in the H.264 standard, there is a macroblock (macroblock, MB), and the macroblock may be further divided into a plurality of prediction blocks (partitions) that can be used for predictive coding. For another example, in the HEVC standard, basic concepts such as a coding unit (coding unit, CU), a prediction unit (prediction unit, PU), and a transform unit (transform unit, TU) are used. The CU is a basic unit for dividing and encoding an image. The PU may correspond to a prediction block and is a basic unit for predictive coding. The TU may correspond to a transform block and is a basic unit for transforming a prediction residual. The CU, the PU, and the TU are essentially blocks.

In this specification, for ease of description and understanding, a to-be-encoded image block in a current encoded image may be referred to as a coding block, and a block that provides prediction information for a coding block in a reference image is a prediction block. The prediction information may indicate a pixel value, a sampling value, or a sampling signal in the prediction block.

(4) An encoding device is a general term of devices that can encode an image or a video. For example, the encoding device may be a desktop computer, a notebook computer, a tablet computer, a set-top box, a mobile phone, a television, a camera, a video camera, a display apparatus, a digital media player, a video game console, or a video stream transmission apparatus.

In embodiments of this application, unless otherwise specified, a quantity of a noun indicates "a singular noun or a plural noun", namely, "one or more". "At least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. "At least one of the following items (pieces)" or a similar expression thereof refers to any combination of these items (pieces), including any combination of singular items (pieces) or plural items (pieces).

In addition, it should be understood that in descriptions of this application, terms such as "first" and "second" are merely used for distinguishing and description, but should not be understood as an indication or implication of relative importance, or should not be understood as an indication or implication of a sequence.

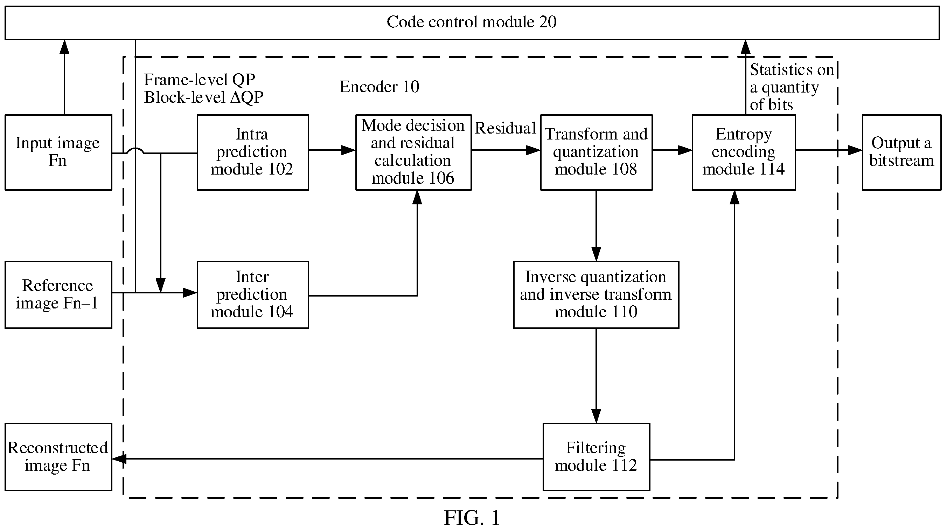

For ease of understanding of this application, the following describes a process of encoding by an encoding device with reference to FIG. 1.

As shown in FIG. 1, based on functional logic division in the encoding process, the encoding device may include an encoder 10 and a code control module 20. The encoder 10 includes: an intra prediction module 102, an inter prediction module 104, a mode decision and residual calculation module 106, a transform and quantization module 108, an inverse quantization and inverse transform module 110, a filtering module 112, and an entropy encoding module 114.

The following uses an example in which the encoding device encodes a current coding block in an input image Fn (that is, an $n^{th}$ frame of image in a video, where n is a positive integer) for description. The current coding block may be any coding block in the input image Fn.

The code control module 20 may provide a frame-level QP (that is, QP_frame) of the input image Fn and a block-level $\Delta$QP of the current coding block for the encoder 10. The block-level $\Delta$QP of the current coding block is an offset value between a QP of the current coding block and the frame-level QP of the image to which the current coding block belongs.

The code control module 20 may determine the frame-level QP of Fn through frame-level code control. Specifically, the code control module 20 may calculate the frame-level QP of the input image Fn based on at least one of the following: a size of an output bitstream corresponding to a video to which the input image Fn belongs, a target bit rate, and other control parameters (for example, scene switching information of two consecutive frames, and an allowed bit rate fluctuation amplitude indicator). For example, when a ratio of the size of the output bitstream corresponding to the video to which the input image Fn belongs to time is greater than the target bit rate, the code control module 20 may increase the frame-level QP of the input image Fn, to reduce a bit rate corresponding to the input image Fn. Therefore, an overall bit rate of the video to which the input image Fn belongs is reduced, and is close to the target bit rate. For another example, when a ratio of the size of the output bitstream corresponding to the video to which the input image Fn belongs to time is less than the target bit rate, the code control module 20 may decrease the frame-level QP of the input image Fn, to increase a bit rate corresponding to the input image Fn. Therefore, an overall bit rate of the video to which the input image Fn belongs is increased, and is close to the target bit rate.

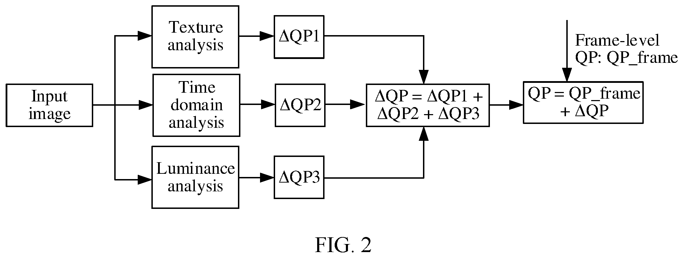

For a method for determining the block-level $\Delta$QP of the current coding block by the code control module 20, refer to the following descriptions of FIG. 2. Details are not described herein.

The intra prediction module 102 may obtain reference data (for example, reconstructed data of a coding block whose adjacent location is already encoded) of the current coding block in the input image Fn. Then, the intra prediction module 102 may select an intra mode based on one or more pre-determined prediction modes, and output a cost (for example, cost = distortion + lambda * bits, where cost represents the cost, distortion represents distortion and may be measured by using a sum of squared differences (sum of squared differences, SSD), bits represents a quantity of bits (bits) used for encoding a change quantization coefficient, and lambda represents a weight) corresponding to a selected optimal mode and prediction data. The prediction data may include information such as a prediction angle identifier of a prediction block, and the optimal mode is a mode with a minimum cost. A mode in which the intra prediction module 102 performs prediction may be referred to as an intra prediction mode.

The inter prediction module 104 may include a motion estimation unit and a motion compensation unit. The motion estimation unit may search a reference image Fn-1 (that is, an (n-1)$^{th}$ frame of image in the video) for a prediction block most similar to a current to-be-encoded block, where similarity measurement may be performed based on a measurement indicator specified by a user, for example, a sum of absolute differences (sum of absolute differences, SAD) or an SSD of prediction residuals. In a mainstream video encoder, a motion estimation process further includes operations such as interpolation and search of fractional pixels. An optimal motion vector (motion vector, MV) is obtained based on a motion estimation result. The optimal MV is an MV corresponding to the prediction block most similar to the current coding block. The motion compensation unit may extract or generate a prediction block based on the motion vector determined by the motion estimation unit, and obtain the prediction data. The prediction data may include information such as an identifier and the MV of the prediction block. When n is an integer greater than 1, the inter prediction module 104 may be used to perform prediction. A mode in which the inter prediction module 104 is used to perform prediction may be referred to as an inter prediction mode.

The mode decision and residual calculation module 106 may include a mode decision unit and a residual calculation unit. The mode decision unit is configured to select whether to use the intra prediction mode or the inter prediction mode for prediction. For example, when a cost of encoding in the intra prediction mode is less than or equal to a cost of encoding in the inter prediction mode, the mode decision unit may select the intra prediction mode for prediction. When a cost of encoding in the intra prediction mode is greater than a cost of encoding in the inter prediction mode, the mode decision unit may select the inter prediction mode for prediction. The residual calculation unit is configured to calculate a pixel value difference, that is, a residual, between a pixel of the current coding block and a pixel of a prediction block obtained in a prediction mode (the intra prediction mode or the inter prediction mode) selected by the mode decision unit.

The transform and quantization module 108 may include a transform unit and a quantization unit. The transform unit is configured to transform the residual into a transform coefficient (transform coefficient). A common transform may include one of the following: a discrete cosine transform (discrete cosine transform, DCT), a discrete sine transform (discrete sine transform, DST), a wavelet transform, or the like. The quantization unit is configured to perform quantization processing on the transform coefficient. Quantization refers to quantizing the transform coefficient to reduce an amount of data representing a quantization coefficient, to implement further compression. Specifically, the quantization unit may determine the QP (that is, QP_frame + $\Delta$QP) of the current coding block based on the block-level $\Delta$QP of the current coding block and the frame-level QP (QP_frame) of the input image Fn from the code control module; and perform quantization processing on the transform coefficient by using a quantization step defined by the QP of the current coding block, to obtain quantized data (which may also be referred to as a transform coefficient obtained through quantization or a quantized transform coefficient).

The inverse quantization and inverse transform module 110 may include an inverse quantization unit and an inverse transform unit. The inverse quantization unit may be configured to perform inverse quantization processing on the quantized data to obtain an inverse quantized transform coefficient. The inverse transform unit is configured to perform inverse transform processing (for example, an inverse DCT, an inverse integer transform, or a conceptually similar inverse transform process) on the inverse quantized transform coefficient, to obtain an inverse transformed residual (which may also be referred to as a reconstructed residual).

The filtering module 112 may filter reconstructed data to obtain image data (which may also be referred to as reconstructed data, a reconstructed image, or a reconstructed block) of the current coding block, to reduce distortion and improve image quality. The reconstructed data is determined based on the inverse transformed residual, for example, may be a result of adding the prediction data and the inverse transformed residual. Because the image data output by the filtering module 112 is quantized and may have distortion, the image data may also be referred to as quantized and distorted reconstructed data. After filtering all coding blocks of the input image, the filtering module 112 may output a reconstructed image (that is, a reconstructed image Fn in FIG. 1) of the input image. In addition, the filtering module 112 may further output filtering information (for example, sample-adaptive offset (sample-adaptive offset, SAO) mode information and compensation information) to the entropy encoding module 114. The filtering module 112 may include at least one of the following: a deblocking filter, a SAO filter, a bilateral filter, an adaptive loop filter (adaptive loop filter, ALF), a sharpening or smoothing filter, and a collaborative filter.

The entropy encoding module 114 is configured to apply an entropy encoding solution to one or more of the quantized data, the prediction data, the SAO mode information and compensation information, and the like, to obtain an encoded bitstream, and output the bitstream. The entropy encoding solution may be one of the following: variable length coding (variable length coding, VLC), context-adaptive VLC (context-adaptive VLC, CAVLC), arithmetic coding, context-adaptive binary arithmetic coding (context-adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE), and the like. In addition, the entropy encoding module 114 may further report a quantity of bits of the bitstream to the code control module 20.

It should be understood that, although FIG. 1 is described by using an example in which the encoder 10 is a video encoder, this application may also be applied to the field of image coding. In this case, the encoder 10 in FIG. 1 may be an image encoder, and the encoder 10 may not include the inter prediction module 104 and the mode decision unit.

When performing encoding, the encoding device may improve, by using an AQ solution, subjective and objective quality after encoding. The following describes the AQ solution with reference to FIG. 2. As shown in FIG. 2, in the AQ solution, an encoding device (for example, a code control module 20 in the encoding device) may analyze an original image, and determine a QP offset value of a current coding block based on a spatial domain feature, a time domain feature, and a luminance feature, to adjust a QP of the current coding block. The following separately provides descriptions thereof.

Adjusting the QP based on the spatial domain feature indicates that the encoding device performs texture analysis on an input image Fn (which may also be referred to as the original image), and determines a first QP offset value (that is, $\Delta QP1$) of the current coding block based on a texture analysis result. Optionally, the encoding device calculates a variance of luminance and chrominance of the current coding block in the input image Fn, and calculates $\Delta QP1$ of the current coding block based on the variance. A larger variance of the current coding block indicates larger $\Delta QP1$. For example, in an AQ algorithm used in open-source encoders of x264 and x265, $\Delta QP1$ is calculate in this method. This method mainly uses an HVS feature and uses a larger quantization step for a coding block containing a complex frequency component, to reduce an impact on vision.

Adjusting the QP based on the time domain feature indicates that the encoding device may perform time domain analysis, to be specific, determine a second QP offset value (that is, $\Delta QP2$) of the current coding block based on time domain correlation of a video sequence. Optionally, the encoding device determines $\Delta QP2$ based on a contribution of the current coding block to another coding block (for example, an unencoded coding block), to adjust encoded image quality of the current coding block. Usually, more information about a coding block referenced by another coding block indicates smaller $\Delta QP2$ of the coding block and higher encoded image quality. On the contrary, less information about a coding block referenced by another coding block indicates larger $\Delta QP2$ of the coding block and poorer encoded image quality. For example, in macroblock tree (macroblock tree, Mbtree) and coding unit tree (coding unit tree, Cutree) technologies in x264 and x265, $\Delta QP2$ is calculated in this method.

Adjusting the QP based on the luminance feature indicates that the encoding device may perform luminance analysis, to be specific, determine a third QP offset value (that is, $\Delta QP3$) of the current coding block based on luminance. Because human eyes have different distortion sensitivities to different luminance intervals, the encoding device may set $\Delta QP3$ corresponding to luminance of the current coding block for the current coding block. According to this method, different bit rates may be allocated for blocks with different luminance based on visual features of human eyes, so that a bit rate can be properly allocated, and subjective image quality can be improved.

According to the foregoing AQ solution, the QP of the current coding block = $\Delta QP1 + \Delta QP2 + \Delta QP3 + QP\_frame = \Delta QP + QP\_frame$. QP_frame is a frame-level QP of the image to which the current coding block belongs, and $\Delta QP$ is a QP offset (which is also referred to as a block-level $\Delta QP$) of the current coding block.

It should be understood that, in actual application, one or more of the foregoing QP adjustment methods may be selected. For example, the encoding device may adjust the QP of the current coding block based on the spatial domain feature and the luminance feature. In this case, the QP of the current coding block = $\Delta QP1 + \Delta QP3 + QP\_frame = \Delta QP + QP\_frame$. For another example, the encoding device may adjust the QP of the current coding block based on the luminance feature. In this case, the QP of the current coding block = $\Delta QP3 + QP\_frame = \Delta QP + QP\_frame$.

When $\Delta QP$ is determined by using the foregoing AQ solution, the following problems may exist.

In the foregoing AQ solution, the encoding device determines $\Delta$QP of the current coding block before encoding the current coding block, to adjust the QP. In other words, the encoding device determines the QP of the current coding block in a "pre-analysis/pre-determining" manner. However, actual encoding effect is further affected by a prediction mode, a transform size, a target bit rate, complexity levels of a time domain and a spatial domain of a scene, and the like. When a pre-determined QP is used for encoding, quality of different regions in an encoded image may be greatly different. For example, some regions are clear and include many details, but some regions are blurry.

In addition, in the foregoing AQ solution, the encoding device determines the QP offset value based on the original image, without considering encoding pressure (for example, the target bit rate and a current QP) in an actual scenario. When the target bit rate is low, due to a limitation of the bit rate, if a QP of an image block cannot be excessively low, encoding quality of some coding blocks in the image may be low, and consequently, encoding quality of the image may be uneven. In addition, in a current mainstream video coding standard, a relationship between a quantization step and a QP is a non-linear exponential relationship. For example, as the QP increases, if the QP changes by 1, a corresponding quantization step increases significantly, an impact on the encoding quality of the image also increases significantly, and consequently, the encoding quality of the image may be uneven.

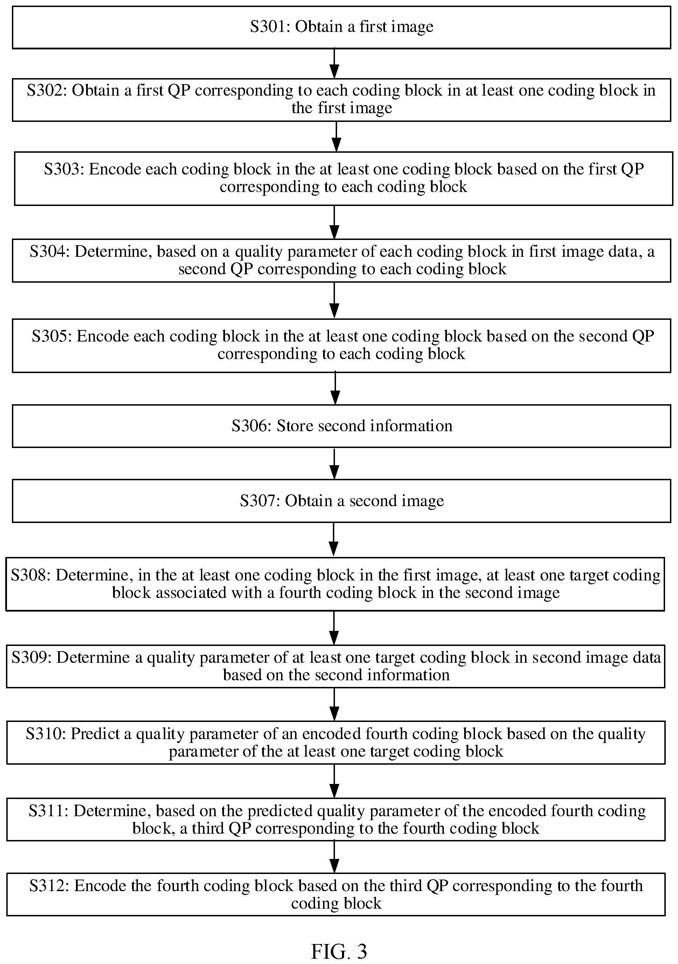

To ensure quality of the encoded image, an embodiment of this application provides an image encoding method. The following describes a procedure of this method in detail with reference to a flowchart shown in FIG. 3.

S301: An encoding device obtains a first image. The first image includes at least one coding block.

The first image is a to-be-encoded image. The first image may be an independent image, or may be a frame of image in a video (for example, an $n^{th}$ frame of image, where n is a positive integer).

In addition, the encoding device may obtain the first image from a locally stored image or video, may obtain the first image from an image or a video from another device, or may obtain the first image from an image previewed by using a camera device.

S302: The encoding device obtains a first QP corresponding to each coding block in the at least one coding block in the first image.

The encoding device may include the code control module 20 shown in FIG. 1. The encoding device may determine, based on a frame-level QP of the first image and a block-level $\Delta$QP corresponding to each coding block that are obtained from the code control module 20, the first QP corresponding to each coding block.

For example, a first coding block is any coding block in the first image. After obtaining, from the code control module 20, the frame-level QP (QP_frame1a) of the first image and a block-level $\Delta$QP (that is, $\Delta$QPa) corresponding to the first coding block, the encoding device may determine that a first QP corresponding to the first coding block is QP_frame1a + $\Delta$QPa.

S303: The encoding device encodes each coding block in the at least one coding block based on the first QP corresponding to each coding block, to obtain first image data.

The first image data may be reconstructed data.

Optionally, S303 may be implemented in one of the following manners:

Manner 1: The encoding device encodes each coding block in the at least one coding block through an entire encoding process shown in FIG. 1, outputs a bitstream, and obtains the first image data. For specific content, refer to the descriptions of FIG. 1. Details are not described herein again.

Manner 2: The encoding device encodes each coding block in the at least one coding block through a partial encoding process shown in FIG. 1, to obtain the first image data.

The following uses a second coding block as an example to describe an implementation process of manner 2. The second coding block may be any coding block in the at least one coding block.

For the second coding block, S303 may include A1 to A4:

A1: The encoding device performs quantization processing on the second coding block based on a first QP corresponding to the second coding block, to obtain quantized data.

A2: The encoding device performs inverse quantization and inverse transform processing on the quantized data based on the first QP corresponding to the second coding block, to obtain inverse transformed residual data.

A3: The encoding device obtains reconstructed data of the second coding block based on prediction data and residual data of the second coding block.

A4: The encoding device filters the reconstructed data to obtain image data that is in the first image data and that corresponds to the second coding block.

For specific content of A1 to A4, refer to the descriptions of FIG. 1. Details are not described herein again.

In manner 2, the first image data used for next encoding may be determined in current encoding, and no bitstream needs to be output. Therefore, encoding efficiency can be improved.

S304: The encoding device determines, based on a quality parameter of each coding block in the first image data, a second QP corresponding to each coding block.

The encoding device may obtain the quality parameter of each coding block in the first image data by comparing the first image data with the first image. Then, the encoding device may determine, based on the quality parameter of each coding block in the first image data, the second QP corresponding to each coding block. A quality parameter of any coding block may include at least one of the following: a peak signal to noise ratio (peak signal to noise ratio, PSNR), a structure similarity (structure similarity index metric, SSIM), or a multi-scale structure similarity (multiple scalar structure similarity index metric, MS-SSIM).

The following uses the first coding block as an example to describe an implementation process of S304. The first coding block may be any coding block in the at least one coding block in the first image.

For the first coding block, S304 may include B1 and B2:

B1: The encoding device may determine, based on a target quality parameter of the first image and a quality parameter of the first coding block in the first image data, a first QP offset value (ΔQP4a for short below) corresponding to the first coding block.

The target quality parameter of the first image may be constant, or may be variable.

In some possible implementations, the target quality parameter of the first image may be a constant target quality parameter entered by a user.

In some other possible implementations, the encoding device may adjust the target quality parameter based on image content and encoding pressure. For example, when a target bit rate is constant, the encoding device may determine an average quality parameter of an encoded image as the target quality parameter of the first image, or may determine that the target quality parameter of the first image is a sum of an average quality parameter of an encoded image and a first offset value. The first offset value may be a positive number, a negative number, or 0. In this way, when a scene displayed in an image is simple, a small quantity of codewords are needed for encoding (in other words, the encoding pressure is low), image encoding quality is good, the average quality parameter of the encoded image is high (it is assumed that a higher quality parameter indicates higher quality), and the target quality parameter of the first image determined accordingly is large. When a scene displayed in an image is complex, a large quantity of codewords are needed for encoding (that is, the encoding pressure is high), image encoding quality is low, the average quality parameter of the encoded image is low, and the target quality parameter of the first image determined accordingly is small.

Optionally, the encoding device may perform B1 by using the following steps.

When the quality parameter of the first coding block is greater than the target quality parameter of the first image (in other words, encoding quality of the first coding block is higher than target quality of the first image), and a difference between the quality parameter of the first coding block and the target quality parameter of the first image falls within a first range, the encoding device may determine that ΔQP4a corresponding to the first coding block is equal to a QP offset value corresponding to the first range. ΔQP4a corresponding to the first coding block is a positive number. In this way, when the encoding quality of the first coding block is higher than the target quality of the first image, the encoding device may increase a QP of the first coding block, so that on the premise of meeting a quality requirement on the first coding block, a bit rate of the first coding block can be reduced.

When the quality parameter of the first coding block is less than the target quality parameter of the first image (in other words, encoding quality of the first coding block is lower than target quality of the first image), and an absolute value of a difference between the quality parameter of the first coding block and the target quality parameter of the first image falls within a second range, the encoding device may determine that an absolute value of ΔQP4a corresponding to the first coding block is equal to a QP offset value corresponding to the second range. ΔQP4a corresponding to the first coding block is a negative number. In this way, when the encoding quality of the first coding block is lower than the target quality of the first image, the encoding device may decrease a QP of the first coding block, so that the encoding quality of the first coding block can be improved.

When the quality parameter of the first coding block is equal to the target quality parameter of the first image, the encoding device may determine that ΔQP4a corresponding to the first coding block is 0.

According to this method, when encoding quality of a coding block in the first image is lower than the target quality of the first image, ΔQP4a is a negative value. Therefore, the encoding quality of the coding block may be improved by decreasing a QP, so that the encoding quality is close to the target quality. When encoding quality of a coding block in the first image is higher than the target quality of the first image, ΔQP4a is a positive value. Therefore, the encoding quality of the coding block may be reduced by increasing a QP, so that the encoding quality is close to the target quality.

In this way, when the target bit rate is constant (that is, a constant bit rate (constant bit rate, CBR)), the encoding device may allocate a bit rate inside the first image, in other words, reduce a bit rate of a coding block whose encoding quality is higher than the target quality, and allocate a saved codeword to a coding block whose encoding quality is lower than the target quality, to improve a bit rate of the coding block whose encoding quality is lower than the target quality. Therefore, overall encoding quality of the first image may be improved, and the encoding quality of the first image may be more balanced.

When the target bit rate is variable, in this method, a bit rate needed by an entire image may be reduced by reducing quality of a coding block whose encoding quality exceeds the target quality.

In addition, this method may be further applied to hierarchical encoding (for example, quality hierarchical encoding) of SHVC and SVC. Generally, for hierarchical coding, a larger layer quantity indicates a smaller QP used and better encoding quality. The encoding device may dynamically adjust a QP of a higher layer depending on whether encoding quality of each layer on the coding block reaches the target quality. For example, when encoding quality of a layer on a coding block is greater than or equal to the target quality, target quality of a higher layer of the coding block does not need to be improved. Specifically, when a coding block corresponding to a same location at the higher layer is encoded, a QP does not need to be further reduced, and a same QP or a larger QP may be used, so that on the premise of ensuring achievement of the target quality, a bit rate of the higher layer is reduced, and an overall bit rate is reduced.

B2: The encoding device determines, based on the first QP corresponding to the first coding block and ΔQP4a corresponding to the first coding block, a second QP corresponding to the first coding block.

The encoding device may include the code control module 20 shown in FIG. 1. The encoding device may re-obtain the frame-level QP (QP _frame 1a) of the first image and the block-level ΔQP (that is, ΔQPa) of the first coding block from the code control module 20, and determine the first QP corresponding to the first coding block based on the frame-level QP and the block-level ΔQP; or may directly obtain the first QP determined in S302. Then, the encoding device may determine that the second QP corresponding to the first coding block is QP_frame1a + ΔQPa + ΔQP4a.

S305: The encoding device encodes each coding block in the at least one coding block in the first image based on the second QP corresponding to each coding block, to obtain second image data.

The second image data may be reconstructed data.

Optionally, S305 may be implemented in one of the following manners:

Manner 1: The encoding device encodes each coding block in the at least one coding block through an entire encoding process shown in FIG. 1, outputs a bitstream, and obtains the second image data. For specific content, refer to the descriptions of FIG. 1. Only a QP of the current coding block is replaced with the second QP. Details are not described herein again.

Manner 2: The encoding device encodes each coding block in the at least one coding block by using an intermediate result in S303, outputs a bitstream, and obtains the second image data.

The following uses a third coding block as an example to describe an implementation process of manner 2. The third coding block may be any coding block in the at least one coding block.

In manner 2, the encoding device may encode the third coding block based on first information (that is, the intermediate result) and a second QP corresponding to the third coding block.

The first information may include at least one of the following: a prediction mode that is of the third coding block and that is determined in step S303, to be specific, a prediction mode that is of the third coding block and that is determined when the third coding block is encoded based on a first QP corresponding to the third coding block; and an MV that is of the third coding block and that is determined in step S303, to be specific, an MV that is of the third coding block and that is determined when the third coding block is encoded based on the first QP corresponding to the third coding block.

For example, in S303, when the encoding device determines that the prediction mode of the third coding block is an intra prediction mode, in S305, the encoding device may no longer determine whether to use the intra prediction mode or an inter prediction mode, but directly use the intra prediction mode to determine prediction data, perform residual calculation, and perform a subsequent encoding operation by using the second QP corresponding to the third coding block.

For another example, in S303, when the encoding device determines that the prediction mode of the third coding block is the inter prediction mode, and determines the MV corresponding to the third coding block, in S305, the encoding device may no longer determine whether to use the intra prediction mode or the inter prediction mode, but directly use the inter prediction mode and the MV corresponding to the third coding block to determine prediction data, perform residual calculation, and perform a subsequent encoding operation by using the second QP corresponding to the third coding block.

In manner 2, an intermediate result of previous encoding may be reused in current encoding, so that an encoding procedure can be simplified, and encoding efficiency can be improved.

It should be understood that this application is not limited to encoding the image twice, and the image may be encoded more than twice (for example, three times, four times, or even more times). When the image is encoded more than twice, the encoding device may adjust, based on a quality parameter of each coding block obtained through previous encoding, a QP corresponding to each coding block in the at least one coding block in current encoding.

It should be understood that the foregoing method may also be applied to video coding. For example, the encoding device encodes each frame of image in a video by using the foregoing method, or encodes a key frame in a video (for example, an image including an active object in the video) by using the foregoing method.

By using the foregoing steps S301 to S305, the encoding device may encode the image at least twice, adjust the QP of each coding block based on the quality parameter of each coding block obtained through previous encoding, and then encode the image based on an adjusted QP. In this way, the encoding device can adjust an encoding parameter QP of current encoding based on actual quality of previous encoding, to ensure quality of an encoded image.

Optionally, in an implementation scenario of the foregoing method, after S305, this method further includes the following.

S306: The encoding device stores second information. The second information may indicate a quality parameter of each coding block in the second image data.

Optionally, the second information is a matrix (which may also be referred to as a quality matrix) including the quality parameter of each coding block in the second image data. In addition, the second information may alternatively be expressed in another form, for example, a table of a correspondence between each coding block in the second image data and a quality parameter.

According to this method, after encoding the first image, the encoding device may store the second information indicating the quality parameter of each coding block in the second image data. In this way, when encoding a subsequent image in a video to which the first image belongs, the encoding device may refer to the second information, so that encoding quality of the subsequent image can be improved.

Optionally, in an implementation scenario of the foregoing method, when the first image is an $n^{th}$ frame of image in the video, after S306, this method may further include the following.

S307: The encoding device obtains a second image.

The second image may be a to-be-encoded image. The second image may be an $(n+1)^{th}$ frame of image in the video, and includes N coding blocks. N is a positive integer.

For a manner in which the encoding device obtains the second image, refer to the manner in which the encoding device obtains the first image in S301. Details are not described herein again.

S308: The encoding device determines, in the at least one coding block in the first image, at least one target coding block associated with a fourth coding block in the second image. The fourth coding block may be any coding block in the N coding blocks.

In the video, one scene may correspond to a plurality of frames of images, and similar blocks may exist in these images. In this case, content of the fourth coding block in the second image may be included in at least one target coding block in the first image. By performing motion estimation on the first image and the second image, the encoding device may determine at least one target coding block that is associated with the fourth coding block and that is in the first image.

S309: The encoding device determines a quality parameter of the at least one target coding block in the second image data based on the second information.

For example, when the second information is the matrix including the quality parameter of each coding block in the second image data, the encoding device may determine a quality parameter of at least one encoded target coding block in the first image by searching the quality matrix.

For another example, when the second information is the table of the correspondence between each coding block in the second image data and the quality parameter, the encoding device may determine, in a table lookup manner, a quality parameter of at least one encoded target coding block in the first image.

S310: The encoding device predicts a quality parameter of an encoded fourth coding block based on the quality parameter of the at least one target coding block.

In some possible manners, when the at least one target coding block associated with the fourth coding block is one target coding block, the encoding device may predict that the quality parameter of the fourth coding block is a quality parameter of the target coding block.

In some other possible manners, when the at least one target coding block associated with the fourth coding block is a plurality of target coding blocks, the encoding device may predict that the quality parameter of the fourth coding block is a weighted average value of quality parameters of the plurality of target coding blocks. A weight of a quality parameter of each target coding block may be the same, or may be in direct proportion to a pixel value corresponding to content in the fourth coding block included in each target coding block.

S311: The encoding device determines, based on the predicted quality parameter of the encoded fourth coding block, a third QP corresponding to the fourth coding block.

The quality parameter of the fourth coding block may include at least one of the following: a PSNR, an SSIM, and an MS-SSIM.

Optionally, S311 includes C1 and C2.

C1: The encoding device determines, based on a target quality parameter of the second image and the predicted quality parameter of the encoded fourth coding block, a second QP offset value ($\triangle QP4b$ for short below) corresponding to the fourth coding block.

For a manner of obtaining the target quality parameter of the second image, refer to the manner of obtaining the target quality parameter of the first image. Details are not described herein again.

Optionally, the encoding device may perform C1 by using the following steps.

When the quality parameter of the fourth coding block is greater than the target quality parameter of the second image (in other words, encoding quality of the fourth coding block is higher than target quality of the second image), and a difference between the quality parameter of the fourth coding block and the target quality parameter of the second image falls within a third range, it is determined that ΔQP4b corresponding to the fourth coding block is equal to a QP offset value corresponding to the third range. ΔQP4b corresponding to the fourth coding block is a positive number. In this way, when the encoding quality of the fourth coding block is higher than the target quality of the second image, the encoding device may increase a QP of the fourth coding block, so that on the premise of meeting a quality requirement on the fourth coding block, a bit rate of the fourth coding block can be reduced.

When the quality parameter of the fourth coding block is less than the target quality parameter of the second image (in other words, encoding quality of the fourth coding block is lower than target quality of the second image), and an absolute value of a difference between the quality parameter of the fourth coding block and the target quality parameter of the second image falls within a fourth range, it is determined that an absolute value of ΔQP4b corresponding to the fourth coding block is equal to a QP offset value corresponding to the fourth range. ΔQP4b corresponding to the fourth coding block is a negative number. In this way, when the encoding quality of the fourth coding block is lower than the target quality of the second image, the encoding device may decrease a QP of the fourth coding block, so that the encoding quality of the fourth coding block can be improved.

When the predicted quality parameter of the encoded fourth coding block is equal to the target quality parameter of the second image, the encoding device may determine that ΔQP4b corresponding to the fourth coding block is 0.

According to this method, when quality of a coding block in the second image is lower than the target quality of the second image, ΔQP4b is a negative value. Therefore, encoding quality of the coding block may be improved by decreasing a QP. When quality of a coding block in the second image is higher than the target quality of the first image, ΔQP4b is a positive value. Therefore, a bit rate needed by the coding block may be reduced by increasing a QP, and a saved bit rate may be used to improve encoding quality of a coding block that is in the second image and whose quality is lower than the target quality of the second image. In this way, overall encoding quality of the second image can be improved without increasing an overall bit rate.

C2: The encoding device determines, based on the second QP offset value corresponding to the fourth coding block, the third QP corresponding to the fourth coding block.

The encoding device may obtain a frame-level QP (QP_framelb) of the second image and a block-level ΔQP (that is, ΔQPb) of the fourth coding block from the code control module 20. Then, the encoding device may determine that the third QP corresponding to the fourth coding block is QP_framelb + ΔQPb + ΔQP4b.

S312: The encoding device may encode the fourth coding block based on the third QP corresponding to the fourth coding block.

The encoding device may encode the current coding block through an entire encoding process shown in FIG. 1, output a bitstream, and obtain a reconstructed image. For specific content, refer to the descriptions of FIG. 1. Only a QP of the current coding block is replaced with the third QP. Details are not described herein again.

Optionally, the second image may alternatively be replaced with an (n+m)th frame, where m is an integer greater than 1.

It should be noted that the N coding blocks may be all coding blocks in the second image, or may be some coding blocks in the second image. In other words, the encoding device may encode all the coding blocks in the second image by using the method in steps S308 to S312, or may encode some coding blocks in the second image by using the method in steps S308 to S312. When the encoding device encodes some coding blocks in the second image by using the method in steps S308 to S312, for another coding block in the second image, the encoding device may perform encoding at least twice by using the method in steps S302 to S305, or may perform encoding only once.

According to the foregoing method, the encoding device may encode the first image in the video at least twice, to improve the encoding quality of the first image. Then, the encoding device may encode the second image in the video once based on the first image whose encoding quality is already improved. Specifically, the encoding device predicts encoding quality of a similar coding block in the subsequent image in the video based on encoding quality of a target coding block in the first image whose encoding quality is already improved, and adjusts a QP based on the predicted encoding quality, so that the encoding quality of the similar coding block in the subsequent image in the video can be improved, and encoding quality of the second image can be improved.

The method shown in FIG. 3 may be applied to an application scenario in which performance of an encoder is redundant and quality of an image output by the encoder needs to be improved. For example, this method may be applied to the following scenarios.

Application scenario 1: mobile phone video recording or video calling application scenario

In this scenario, resolution of an image actually captured by a mobile phone is 1080P@30 frames per second (frame per second, fps) or 720P@30 fps. Resolution of an encoder in most mobile phones is at least 4K@30 fps. Therefore, in this scenario, the mobile phone may code, at least twice by using the method in this application, the image actually captured by the mobile phone, to improve overall encoding quality of the image output by the encoder.

Application scenario 2: video surveillance scenario

In this scenario, the encoding device usually uses a low bit rate for encoding, and consequently, image quality is uneven. For example, for a static complex-background region, definition of the region is high after encoding. For a motion region and a weak-texture region, problems such as local blur, trailing, and color residue usually exist in the region after encoding. In this scenario, by using the method in this application, the encoding device may adjust a QP based on quality of an encoded image by setting an appropriate target quality parameter, and encode the image based on an adjusted QP, so that overall encoding quality of the image can be improved.

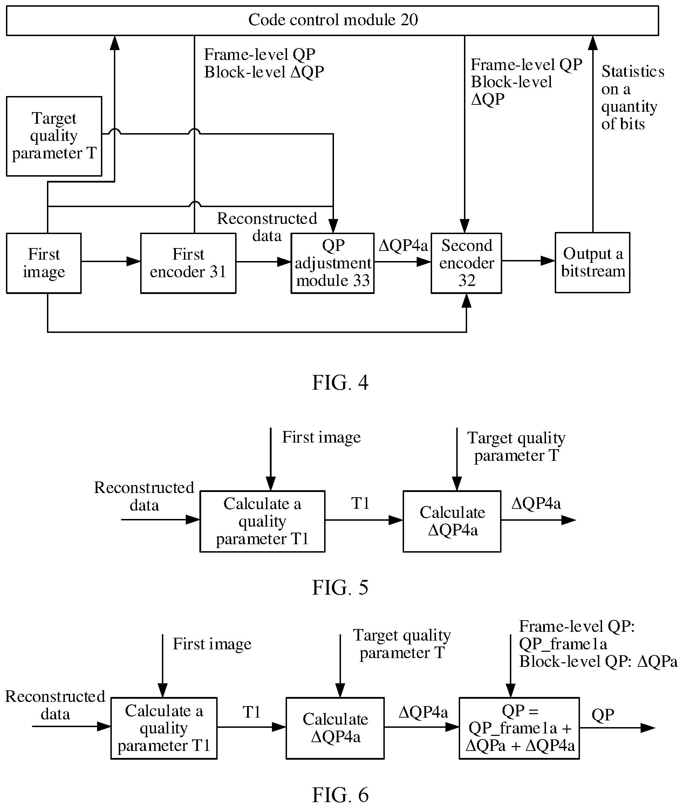

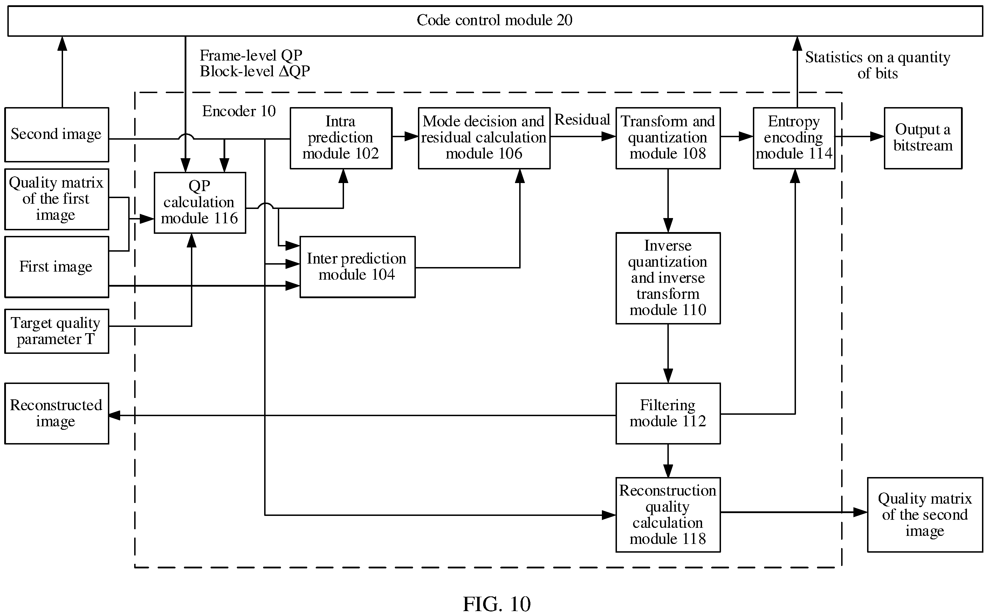

The following describes implementations of the method shown in FIG. 3 with reference to FIG. 4 to FIG. 12. FIG. 4 to FIG. 9 mainly describe a possible case 1. To be specific, an encoding device encodes an image at least twice, adjusts a QP of a corresponding coding block based on a quality parameter of each coding block obtained through previous encoding, and then encodes the image based on an adjusted QP. FIG. 10 to FIG. 12 mainly describe a possible case 2. To be specific, an encoding device encodes a first image in a video at least twice, predicts a QP of a coding block in a second image in the video based on encoding quality of an associated coding block in the first image, and encodes the second image in the video once.

The following describes an implementation of the foregoing possible case 1 with reference to FIG. 4 to FIG. 9.

As shown in FIG. 4, the encoding device may include: a first encoder 31, a second encoder 32, a QP adjustment module 33, and a code control module 20.

The code control module 20 may provide a frame-level QP (that is, QP _frame 1a) of the first image and a block-level $\Delta$QP (that is, $\Delta$QPa) of a current coding block in the first image for the first encoder 31 and the second encoder 32. In other words, the first encoder 31 and the second encoder 32 share one code control module 20. In this way, when encoding each coding block in the first image, the first encoder 31 and the second encoder 32 may use a same frame-level QP and a same block-level $\Delta$QP.

The first encoder 31 may be the encoder 10 shown in FIG. 1 or an encoder of another architecture (for example, a joint photographic experts group (joint photographic experts group, JPEG) image encoder or a video encoder in H.264/H.265). The first encoder 31 may encode each coding block in the first image by performing steps S301 to S303, and output reconstructed data obtained through quantization and distortion. Optionally, the reconstructed data may not be written into a double data rate (double data rate, DDR) memory as reference data of a next frame of image.

The QP adjustment module 33 may determine, by performing step S304, a QP offset value (that is, $\Delta$QP4a in the method shown in FIG. 3) corresponding to each coding block in the first image.

The following describes the QP adjustment module 33 with reference to FIG. 5. As shown in FIG. 5, the QP adjustment module 33 may determine, by performing operations of D1 to D3, a QP offset value corresponding to any coding block in the first image.

D1: The QP adjustment module 33 may calculate, by comparing the first image (that is, an original image) with the reconstructed data output by the first encoder 31, a quality parameter (which may also be referred to as an image quality measurement indicator) T1 of a first coding block after the first coding block in the first image is encoded by using the first encoder 31. The first coding block is any coding block in the first image. The quality parameter may be an objective indicator such as a PSNR, an SSIM, or an MS-SSIM, or may be other user-defined indicators (for example, a frequency domain (for example, DCT transform) energy (for example, may be represented by a sum of absolute values of transform coefficients) change amplitude of each coding block before and after encoding).

D2: The QP adjustment module 33 may calculate, based on a difference between the quality parameter T1 of the first coding block and a target quality parameter T of the first image, an encoding parameter that needs to be adjusted and that corresponds to the first coding block, for example, $\Delta$QP4a.

$\Delta$QP4a may be a positive number, or may be a negative number. For example, if a greater quality parameter is better, when T1 is greater than T, $\Delta$QP4a is a positive number, or when T1 is less than T, $\Delta$QP4a is a negative number. For another example, if a smaller quality parameter is better, when T1 is greater than T, $\Delta$QP4a is a negative number, or when T1 is less than T, $\Delta$QP4a is a positive number.

Optionally, the QP adjustment module 33 may determine $\Delta$QP4a by using the following code.

```
Diff = T – T1
QualityThr[8] = [a1,a2,a3,a4,a4,a6,a7,a8];


AbsDiff = abs(Diff);
ΔQP4a = 0;
for(i = 0; i < 8; i++)
    if(AbsDiff > QualityThr[i]) ΔQP4++;
```

```
Diff = T – T1


if(Diff < 0)
    ΔQP4a = -ΔQP4a
```

Diff is the difference between the quality parameter T1 of the first coding block and the target quality parameter T of the first image; abs(Diff) is an absolute value of Diff; and QualityThr[8] is a threshold used to determine an interval to which the difference between the quality parameter T1 of the first coding block and the target quality parameter T of the first image belongs. In this code, eight thresholds such as a1, a2, a3, a4, a4, a6, a7, and a8 are used as examples. It should be understood that, in actual use, another quantity (for example, 4, 5, or 6) of thresholds may alternatively be used.

D3: The QP adjustment module 33 may output, to the second encoder 32, the encoding parameter that needs to be adjusted and that corresponds to the first coding block.

Optionally, after D2, the QP adjustment module 33 may further store the encoding parameter that needs to be adjusted and that corresponds to the first coding block.

The second encoder 32 may be the encoder shown in FIG. 1 or an encoder of another architecture (for example, an image JPEG encoder or a video encoder in H.264/H.265). The second encoder 32 may determine, based on the frame-level QP (for example, QP_framela) of the first image and a block-level QP (for example, ΔQPa) of each coding block that are output by the code control module 20 and a block-level QP (for example, ΔQP4a) of each coding block output by the QP adjustment module 33, that a second QP corresponding to each coding block in the first image is Qp_frame 1a + ΔQPa + ΔQP4a (for specific content, refer to S304), encode each coding block in the first image based on the second QP corresponding to each coding block, and output a final video or image bitstream (for specific content, refer to S305).

A size of a coding block used when the second encoder 32 encodes the first image is the same as a size of a coding block used when the first encoder 31 encodes the first image, and sizes of the first image used for the two times of encoding are also the same. In this way, a QP corresponding to a coding block in encoding by the second encoder 32 is adjusted based on encoding quality of a coding block encoded by the first encoder 31, so that the encoding quality of the coding block can be effectively improved.

Optionally, when the second encoder 32 is a video encoder, the second encoder 32 may further output a reconstructed image of the first image, to serve as a reference image of a next frame of image in the video. For specific content, refer to S305. Details are not described herein again.

Optionally, the first encoder 31 may further output intermediate results (for example, the first information in the method shown in FIG. 3) for encoding the first image, and the like. In this way, the second encoder 32 may encode the first image by using the intermediate results (for details, refer to manner 2 in S305), so that a calculation amount of encoding the first image by the second encoder 32 can be reduced, and encoding efficiency can be improved.

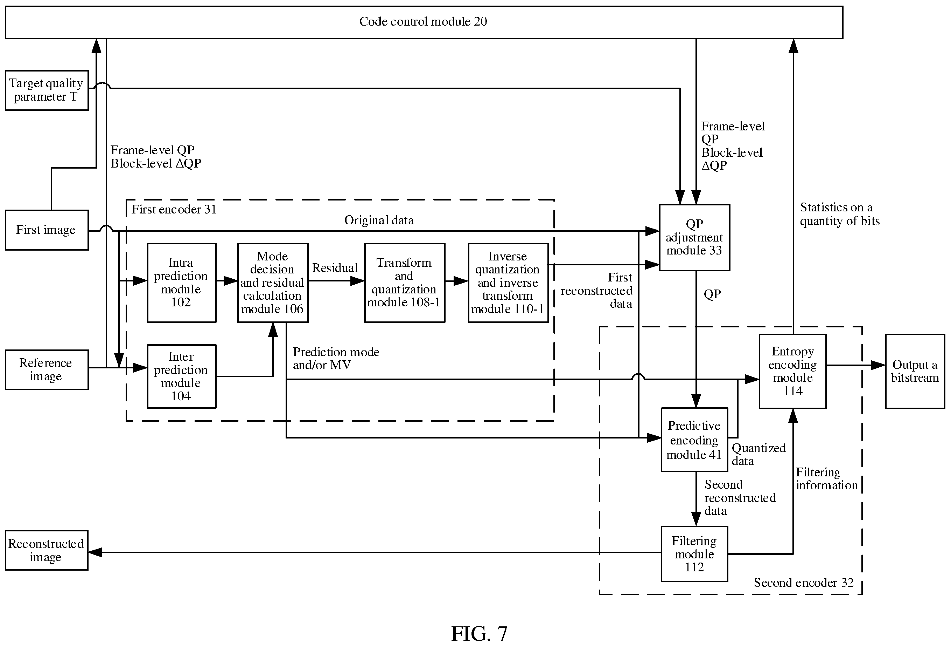

The first encoder 31 and the second encoder 32 may be different encoders having a same architecture, may be a same encoder, or may be encoders having different architectures (for example, as shown in FIG. 7). When the first encoder 31 and the second encoder 32 are the same encoder, the encoding device may invoke the same encoder in a time division multiplexing manner to encode each coding block in the first image. For example, the encoder is first invoked to perform steps S301 to S303, and then the encoder is invoked to perform step S305.

In some possible implementations, the QP adjustment module 33 may determine a QP corresponding to each coding block in the first image, and output the QP corresponding to each coding block in the first image to the second encoder 32. The second encoder 32 may encode each coding block in the first image based on the QP determined by the QP adjustment module 33, and output a final video or image bitstream (for specific content, refer to S305). FIG. 6 shows a manner in which the QP adjustment module 33 determines a QP corresponding to each coding block in the first image. As shown in FIG. 6, based on FIG. 4, after determining a QP offset value corresponding to each coding block in the first image, the QP adjustment module 33 may further determine that a QP corresponding to each coding block is QP = QP_framela + ΔQPa + ΔQP4a (that is, the second QP in step S304, where for specific content, refer to step S304), and output the determined QP to the second encoder 32.

According to this embodiment, the encoding device may encode the image at least twice. Specifically, after encoding each coding block in the first image by using the first encoder 31, the encoding device may adjust an encoding parameter (for example, adjust a QP) corresponding to a corresponding coding block based on encoding quality of each coding block, and then code, by using the second encoder 32, the corresponding coding block in the first image by using an adjusted QP. In this way, the encoding device can adjust an encoding parameter QP of current encoding based on actual quality of previous encoding, to ensure quality of an encoded image.

FIG. 7 shows a possible structure of the encoding device shown in FIG. 4. The following describes in detail with reference to FIG. 7.

A first encoder 31 may include an intra prediction module 102, an inter prediction module 104, a mode decision and residual calculation module 106, a transform and quantization module 108-1, and an inverse quantization and inverse transform module 110-1.

A second encoder 32 may include a predictive encoding module 41, a filtering module 112, and an entropy encoding module 114.

Each module in the first encoder 31 may encode each coding block in a first image to obtain first reconstructed data (that is, the first image data in step S303), and output the first reconstructed data to a QP adjustment module 33.

In addition, the mode decision and residual calculation module 106 may output a determined intermediate result to the predictive encoding module 41 and the entropy encoding module 114. The intermediate result may include a prediction mode and/or an MV

For specific content of the modules in the first encoder 31, refer to the descriptions of FIG. 1 and FIG. 3. Details are not described herein again.

The QP adjustment module 33 may determine a QP corresponding to each coding block in the first image, and output the determined QP corresponding to each coding block to the predictive encoding module 41. For specific content of the QP adjustment module 33, refer to the descriptions of FIG. 4 to FIG. 6. Details are not described herein again.

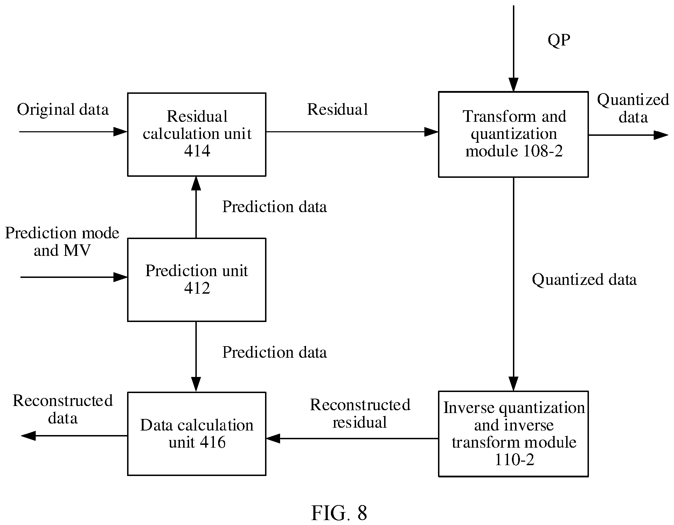

The predictive encoding module 41 may encode each coding block in the first image by using the intermediate result and the QP corresponding to each coding block, to output quantized data corresponding to each coding block to the entropy encoding module 114, and output second reconstructed data corresponding to each coding block to the filtering module 112. For specific content of the predictive encoding module 41, refer to the following descriptions of FIG. 8.

The filtering module 112 may filter reconstructed data corresponding to each coding block, to obtain reconstructed data corresponding to each coding block in the first image. In addition, the filtering module 112 may further output filtering information (for example, SAO mode information and compensation information) to the entropy encoding module 114. For specific content of the filtering module 112, refer to the descriptions of FIG. 1. Details are not described herein again.

The entropy encoding module 114 may apply an entropy encoding solution to one or more of quantized data, prediction data, the SAO mode information and compensation information, and the like, to obtain an encoded bitstream. For specific content of the entropy encoding module 114, refer to the descriptions of FIG. 1. Details are not described herein again.

With reference to FIG. 8, the following describes a processing process of the predictive encoding module 41 by using a first coding block in the first image as an example. The first coding block is any coding block in the first image.

As shown in FIG. 8, the predictive encoding module 41 includes: a prediction unit 412, a residual calculation unit 414, a transform and quantization module 108-2, an inverse quantization and inverse transform module 110-2, and a data calculation unit 416.

The prediction unit 412 may predict the first coding block by using an intermediate result from the mode decision and residual calculation module 106, to generate prediction data of the first coding block, and output the prediction data of the first coding block to the residual calculation unit 414 and the data calculation unit 416. The intermediate result may include a prediction mode, adjacent reference data, and time-domain compensation data (for example, an MV). For a manner in which the prediction unit 412 generates the prediction data, refer to the descriptions of the intra prediction module 102 or the inter prediction module 104. Details are not described herein again.

The residual calculation unit 414 may generate a residual of the first coding block based on original data of the first coding block in the first image and the prediction data of the first coding block, and output the residual of the first coding block to the transform and quantization module 108-2. For a specific process in which the residual calculation unit 414 generates the residual of the first coding block, refer to the descriptions of FIG. 1. Details are not described herein again.

The transform and quantization module 108-2 may process the residual of the first coding block by using a QP of the first coding block from the QP adjustment module 33, to obtain quantized data of the first coding block, and output the quantized data of the first coding block to the entropy encoding module 114 and the inverse quantization and inverse transform module 110-2. For a specific process in which the transform and quantization module 108-2 obtains the quantized data, refer to the descriptions of FIG. 1. Details are not described herein again.

After processing the quantized data of the first coding block, the inverse quantization and inverse transform module 110-2 obtains an inverse transformed residual (which may also be referred to as a reconstructed residual) of the first coding block, and outputs the reconstructed residual of the first coding block to the data calculation unit 416. For a specific process in which the inverse quantization and inverse transform module 110-2 obtains the inverse transformed residual, refer to the descriptions of FIG. 1. Details are not described herein again.

The data calculation unit 416 obtains reconstructed data of the first coding block (that is, the second reconstructed data in FIG. 7) based on the prediction data of the first coding block and the inverse transformed residual of the first coding block, and outputs the reconstructed data of the first coding block to the filtering module 112. The reconstructed data is a result of summing the prediction data and the inverse transformed residual.

It should be understood that, in this embodiment, an example in which a coding block is encoded is used for description. The encoding device may alternatively perform encoding at a smaller prediction granularity. For example, in some video coding standards, such as H.265 or a versatile video coding (versatile video coding, VVC) standard, one block may include a plurality of coding units, different coding units may use different encoding modes, and encoding of adjacent coding units may have spatial dependence. Therefore, the encoding device in this embodiment may be used for a smaller prediction coding granularity (for example, a CU).

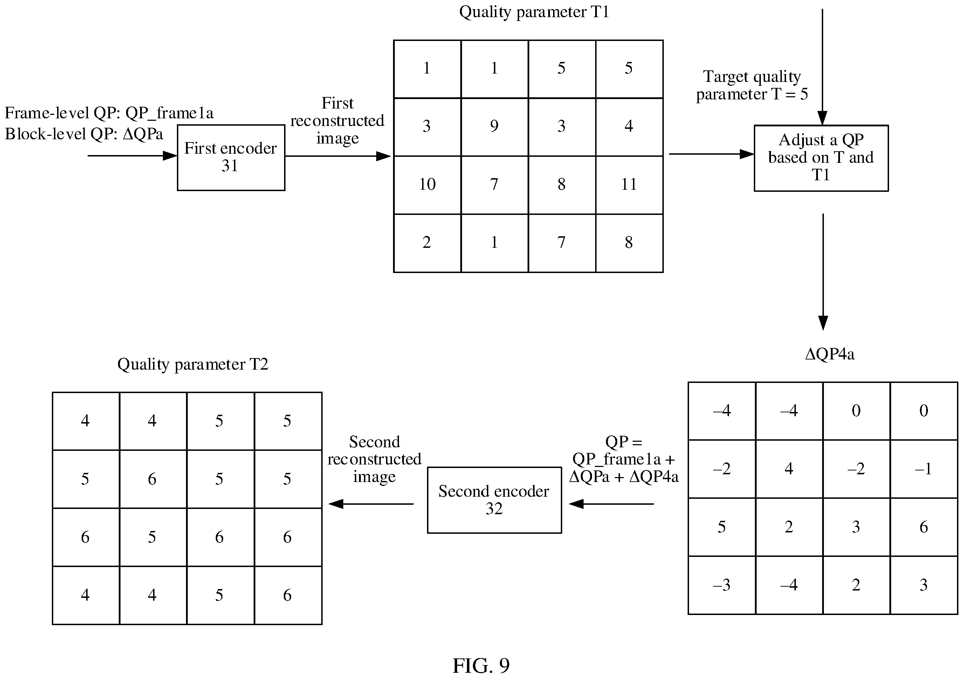

FIG. 9 is a diagram of encoding performed by using the encoding device shown in FIG. 4 or FIG. 7. As shown in FIG. 9, after encoding each coding block in a first image by using a frame-level QP of the first image and a block-level QP (that is, $\triangle$QP) corresponding to each coding block in the first image, a first encoder 31 obtains a first reconstructed image (that is, the first image data in the method shown in FIG. 3) of the first image. A quality parameter T1 of each coding block in the first image data is shown in FIG. 9. When a target quality parameter T is 5, the encoding device may adjust, based on a difference between T1 and T of each coding block, a QP corresponding to each coding block in the first image. For example, the encoding device may determine a QP offset value $\triangle$QP4a corresponding to each coding block in the first image; and then determine, based on $\triangle$QP4a corresponding to each coding block, the QP corresponding to each coding block in the first image. A second encoder 32 may encode each coding block in the first image by using a QP corresponding to each coding block, to obtain a second reconstructed image (that is, the second image data in the method shown in FIG. 3) of the first image. A quality parameter T2 of each coding block in the second image data is shown in FIG. 9. Refer to FIG. 9. It can be learned that, in comparison with the quality parameter T1 of each coding block in the first image data, the quality parameter T2 of each coding block in the second image data is closer to the target quality parameter T, a difference between quality parameters of different coding blocks in the second image data is also small, and quality is more uniform.

According to this embodiment, the encoding device may encode an image at least twice, adjust, based on a quality parameter of each coding block obtained through previous encoding, a QP corresponding to each coding block in the image, and then encode the image based on an adjusted QP. In this way, the encoding device can adjust an encoding parameter QP of current encoding based on actual quality of previous encoding, to ensure quality of an encoded image. In addition, when performing current encoding, the encoding device uses an intermediate result of previous encoding, to simplify an encoder structure of the current encoding, and effectively reduce performance consumption of the encoding device.

The following describes an implementation of the foregoing possible case 2 with reference to FIG. 10 to FIG. 12.

As shown in FIG. 10, an encoding device may include an encoder 10 and a code control module 20.

The encoder 10 may include: an intra prediction module 102, an inter prediction module 104, a mode decision and residual calculation module 106, a transform and quantization module 108, an inverse quantization and inverse transform module 110, a filtering module 112, an entropy encoding module 114, a QP calculation module 116, and a reconstruction quality calculation module 118.

In this embodiment, for some images (for example, an nth frame of image in a video, that is, the first image in the method shown in FIG. 3) in the video, the encoding device may encode the image at least twice. For example, the encoding device invokes the encoder 10 at least twice in a time division multiplexing manner to encode each coding block in the image, and adjusts, based on encoding quality of a coding block in the image obtained through previous encoding, a QP corresponding to each coding block in the image during current encoding. In this case, the encoding device may invoke only the following modules in the encoder 10 to encode the image: the intra prediction module 102, the inter prediction module 104, the mode decision and residual calculation module 106, the transform and quantization module 108, the inverse quantization and inverse transform module 110, the filtering module 112, and the entropy encoding module 114. For a specific encoding process, refer to descriptions of FIG. 3 to FIG. 6. Details are not described herein again.

For another image (for example, an (n+1)th frame of image in the video, that is, the second image in the method shown in FIG. 3) in the video, the encoding device may predict encoding quality of a similar coding block in a subsequent image in the video based on encoding quality of a target coding block in the nth frame of image in the video, and adjust, based on the predicted encoding quality, a QP corresponding to each similar coding block. The following describes this in detail by using an example in which a to-be-encoded image is the second image and a reference image is the first image.

The code control module 20 may output a frame-level QP (QP_framelb) of the second image and a block-level ΔQP (ΔQPb) of a current coding block to the QP calculation module 116. The current coding block may be any coding block in the second image.

The QP calculation module 116 may determine, by performing S308 to S311, a QP (that is, the third QP in the method shown in FIG. 3) corresponding to the current coding block in the second image, and output the determined QP to the intra prediction module 102 and the inter prediction module 104. Then, the encoder 10 may encode the current coding block in the second image by using the third QP with reference to the descriptions of FIG. 1 and FIG. 3.

The reconstruction quality calculation module 118 may determine, based on the second image and a reconstructed image that is of the second image and that is from the filtering module 112, a quality matrix indicating encoding quality of each coding block in the second image.

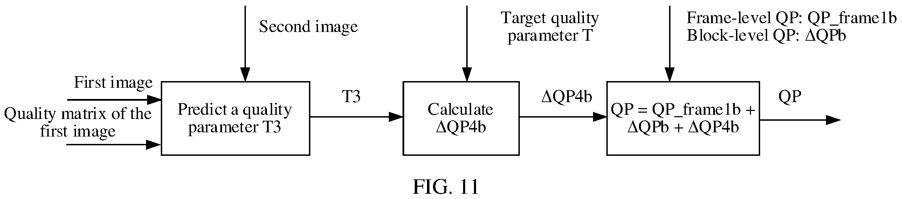

The following describes, with reference to FIG. 11, a process in which the QP calculation module 116 determines the QP corresponding to the current coding block in the second image. As shown in FIG. 11, the QP calculation module 116 may determine, by performing operations E1 to E3, a QP corresponding to the current coding block in the second image.

E1: The QP calculation module 116 predicts a quality parameter T3 of each coding block in the second image based on a first image and a quality matrix of the first image.

Specifically, the QP calculation module 116 may search, through motion estimation, the first image for at least one target coding block closest to the current coding block. The at least one target coding block may also be referred to as a target coding block associated with the current coding block. Then, the QP calculation module 116 may determine a quality parameter of the at least one target coding block based on the quality matrix of the first image. The quality matrix may be a two-dimensional quality matrix. The QP calculation module 116 may predict the quality parameter of the current coding block based on the quality parameter of the at least one target coding block.

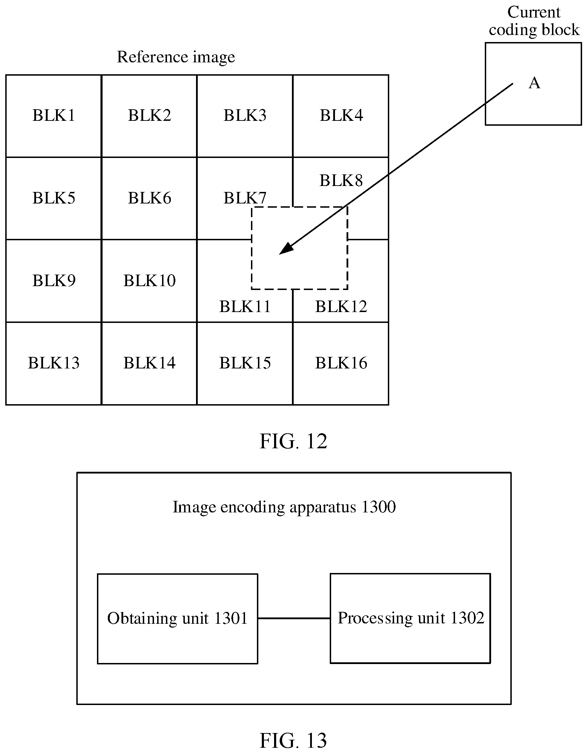

When the target coding block associated with the current coding block may include a plurality of target coding blocks, the encoding device may predict that the quality parameter of the current coding block is a weighted average value of quality parameters of the plurality of target coding blocks. For example, as shown in FIG. 12, the current coding block in the second image is a coding block A, and coding blocks associated with the coding block A in the first image (that is, a reference image) include BLK7, BLK8, BLK11, and BLK12. In other words, a block (referred to as a reference block below) that matches the coding block A in the first image is in BLK7, BLK8, BLK11, and BLK12. Assuming that quality parameters of BLK7, BLK8, BLK11, and BLK12 are respectively Q7, Q8, Q11, and Q12, the QP calculation module 116 may predict that a quality parameter of the coding block A is:

$$QA = w1 * Q7 + w2 * Q8 + w3 * Q11 + w4 * Q12$$

w1, w2, w3, and w4 are weights corresponding to BLK7, BLK8, BLK11, and BLK12 respectively, and a weight corresponding to each block may be a ratio of a quantity of pixels of a reference block in a corresponding block to a total quantity of pixels of the reference block.

E2: The QP calculation module 116 determines, based on the predicted quality parameter T3 of each coding block in the encoded second image, a QP offset value (that is, ΔQP4b in the method shown in FIG. 3) of a QP corresponding to each coding block in the second image. For a method for determining ΔQP4b by the QP calculation module 116, refer to the method for determining ΔQP4a by the QP adjustment module 33. Details are not described herein again.

E3: The QP calculation module 116 determines, based on ΔQP4b corresponding to each coding block, that the QP corresponding to each coding block in the second image is QP = QP_frame1b + ΔQPb + ΔQP4b (that is, the third QP in the method shown in FIG. 3).

For specific content of E1 to E3, refer to the method shown in FIG. 3. Details are not described herein again.

In this embodiment, the encoding device may encode some images in the video at least twice, and encode another image in the video once. For example, when a frame rate of a to-be-encoded video is 25 fps, the encoding device may select five frames of images within one second to perform encoding at least twice, and encode another frame of image within one second once.

The encoding device may flexibly select an image on which the encoding is performed at least twice and an image on which the encoding is performed once. Optionally, before encoding a frame in the video, the encoding device may determine in advance whether to perform encoding at least twice or perform encoding once. A principle of determining in advance is as follows: In a video sequence, one scene (shot) may correspond to a plurality of consecutive frames of images, and encoding results of these images are close. In this case, encoding quality of a similar coding block in a current frame of image may be predicted by using encoding quality of a previous frame of image. Based on this principle, when there are a plurality of frames of similar images, the encoding device may select some images from the plurality of frames of similar images for encoding twice, and select other images for encoding once.

According to this embodiment, the encoding device may encode the first image in the video at least twice, to improve encoding quality of the first image. Then, the encoding device may encode a second image in the video once based on the first image whose encoding quality is already improved. Specifically, the encoding device predicts encoding quality of a similar coding block in a subsequent image in the video based on encoding quality of a target coding block in the first image whose encoding quality is already improved, and adjusts, based on the predicted encoding quality, a QP corresponding to each similar coding block, so that the encoding quality of the similar coding block in the subsequent image in the video can be improved, and encoding quality of the second image can be improved.

In addition, in comparison with the embodiments shown in FIG. 4 to FIG. 9, this embodiment has a small change to an encoder, and reduces a quantity of encoders, to simplify an architecture of the encoding device.

Optionally, the encoding device may also encode all images in the video once by using the method in this embodiment. In this way, the encoding device predicts the encoding quality of the similar coding block in the subsequent image in the video based on encoding quality of a target coding block in an encoded image, and adjusts, based on the predicted encoding quality, a QP corresponding to each similar coding block, so that the encoding quality of the similar coding block in the subsequent image in the video can be improved, and encoding quality of the subsequent image can be further improved.

Based on a same inventive concept as the embodiments shown in FIG. 3 to FIG. 12, an embodiment of this application provides an image encoding apparatus by using FIG. 13, and the image encoding apparatus may be configured to perform functions of related steps in the foregoing embodiments. The function may be implemented by hardware, or may be implemented by software or by hardware executing corresponding software. The hardware or the software includes one or more modules corresponding to the foregoing function. As shown in FIG. 13, the image encoding apparatus 1300 may include an obtaining unit 1301 and a processing unit 1302.

The obtaining unit 1301 is configured to: obtain a first image, where the first image includes at least one coding block; and obtain a first quantization parameter QP corresponding to each coding block in the at least one coding block.

The processing unit 1302 is configured to: encode each coding block in the at least one coding block based on the first QP corresponding to each coding block to obtain first image data; determine, based on a quality parameter of each coding block in the first image data, a second QP corresponding to each coding block; and encode each coding block in the at least one coding block based on the second QP corresponding to each coding block to obtain second image data.

Optionally, the processing unit 1302 is specifically configured to: determine, based on a target quality parameter of the first image and a quality parameter of a first coding block in the first image data, a first QP offset value corresponding to the first coding block, where the first coding block is any coding block in the at least one coding block; and determine, based on a first QP corresponding to the first coding block and the first QP offset value corresponding to the first coding block, a second QP corresponding to the first coding block.

Optionally, the processing unit 1302 is specifically configured to:

when a quality parameter of the first coding block is greater than the target quality parameter of the first image, and a difference between the quality parameter of the first coding block and the target quality parameter of the first image falls within a first range, determine that the first QP offset value corresponding to the first coding block is equal to a QP offset value corresponding to the first range, where the first QP offset value corresponding to the first coding block is a positive number; or

when a quality parameter of the first coding block is less than the target quality parameter of the first image, and an absolute value of a difference between the quality parameter of the first coding block and the target quality parameter of the first image falls within a second range, determine that an absolute value of the first QP offset value corresponding to the first coding block is equal to a QP offset value corresponding to the second range, where the first QP offset value corresponding to the first coding block is a negative number; or

when a quality parameter of the first coding block is equal to the target quality parameter of the first image, determine that the first QP offset value corresponding to the first coding block is 0.

Optionally, the processing unit 1302 is specifically configured to: after encoding each coding block in the at least one coding block based on the first QP corresponding to each coding block, compare the first image data with the first image, to obtain the quality parameter of each coding block in the first image data.

Optionally, the processing unit 1302 is specifically configured to: perform quantization processing on a second coding block based on a first QP corresponding to the second coding block, to obtain quantized data, where the second coding block is any coding block in the at least one coding block; perform inverse quantization and inverse transform processing on the quantized data based on the first QP corresponding to the second coding block, to obtain inverse transformed residual data; obtain reconstructed data of the second coding block based on prediction data and residual data of the second coding block; and filter the reconstructed data, to obtain image data that is in the first image data and that corresponds to the second coding block.

Optionally, the processing unit 1302 is specifically configured to encode a third coding block based on first information and a second QP corresponding to the third coding block. The third coding block is any coding block in the at least one coding block. The first information includes at least one of the following: a prediction mode that is of the third coding block and that is determined when the third coding block is encoded based on a first QP corresponding to the third coding block, and a motion vector that is of the third coding block and that is determined when the third coding block is encoded based on the first QP corresponding to the third coding block.

Optionally, the processing unit 1302 is specifically configured to: after each coding block in the at least one coding block is encoded based on the second QP corresponding to each coding block, store second information. The second information indicates a quality parameter of each coding block in the second image data.

Optionally, the second information is a matrix including the quality parameter of each coding block in the second image data.

Optionally, the obtaining unit 1301 is specifically configured to: when the first image is an $n^{th}$ frame of image in a video, obtain a second image after the second information is stored. The second image is an $(n+1)^{th}$ frame of image in the video, the second image includes N coding blocks, and N is a positive integer. The processing unit 1302 is specifically configured to: determine, in the at least one coding block, at least one target coding block associated with a fourth coding block in the second image, where the fourth coding block is any coding block in the N coding blocks, and content of the fourth coding block is included in the at least one target coding block; determine a quality parameter of the at least one target coding block in the second image data based on the second information; predict a quality parameter of an encoded fourth coding block based on the quality parameter of the at least one target coding block; determine, based on the predicted quality parameter of the encoded fourth coding block, a third QP corresponding to the fourth coding block; and encode the fourth coding block based on the third QP corresponding to the fourth coding block, where n is a positive integer.

Optionally, the processing unit 1302 is specifically configured to: determine, based on a target quality parameter of the second image and the predicted quality parameter of the encoded fourth coding block, a second QP offset value corresponding to the fourth coding block; and determine, based on the second QP offset value corresponding to the fourth coding block, the third QP corresponding to the fourth coding block.

Optionally, the processing unit 1302 is specifically configured to:

when a quality parameter of the fourth coding block is greater than the target quality parameter of the second image, and a difference between the quality parameter of the fourth coding block and the target quality parameter of the second image falls within a third range, determine that the second QP offset value corresponding to the fourth coding block is equal to a QP offset value corresponding to the third range, where the second QP offset value corresponding to the fourth coding block is a positive number; or

when a quality parameter of the fourth coding block is less than the target quality parameter of the second image, and an absolute value of a difference between the quality parameter of the fourth coding block and the target quality parameter of the second image falls within a fourth range, determine that an absolute value of the second QP offset value corresponding to the fourth coding block is equal to a QP offset value corresponding to the fourth range, where the second QP offset value corresponding to the fourth coding block is a negative number; or

when the predicted quality parameter of the encoded fourth coding block is equal to the target quality parameter of the second image, determine that the second QP offset value corresponding to the fourth coding block is 0.

Optionally, a quality parameter of any coding block includes at least one of the following: a peak signal to noise ratio, a structure similarity, or a multi-scale structure similarity.

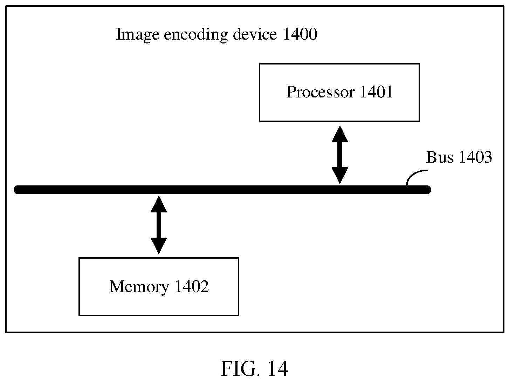

FIG. 14 is a block diagram of an image encoding device 1400 according to an embodiment of this application. It should be understood that the image encoding device 1400 can perform the steps performed by the encoding device in the embodiments shown in FIG. 3 to FIG. 12. The image encoding device 1400 includes a processor 1401 and a memory 1402 coupled to the processor 1401. The memory 1402 may be configured to store program code. The processor 1401 may invoke the program code stored in the memory, to perform the foregoing image encoding method.

The processor 1401 may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA), or another programmable logic device, a transistor logic device, a hardware component, or any combination thereof. The general purpose processor may be a microprocessor or any regular processor.

The memory 1401 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

Optionally, the processor 1401 and the memory 1402 may be connected to each other through a bus 1403. The bus 1403 may be a peripheral component interconnect (peripheral component interconnect, PCI) bus, an extended industry standard architecture (extended industry standard architecture, EISA) bus, or the like. The bus 1403 may be classified into an address bus, a data bus, a control bus, or the like. For ease of representation, the bus is represented by using only one bold line in FIG. 14, but this does not mean that there is only one bus or one type of bus.

Based on the foregoing embodiments, an embodiment of this application further provides a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. Examples of the computer-readable medium include but are not limited to: a RAM, a ROM, an EEPROM, or other optical disk storage media or disk storage media or other magnetic storage devices, or any other computer-accessible media that can be used to carry or store expected program code in an instruction form or in a data structure form.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to the devices in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide an image encoding method, apparatus, and device. In this method, after obtaining a first image, an encoding device may obtain a first QP corresponding to each coding block in at least one coding block in the first image; and then encode each coding block in the at least one coding block based on the first QP corresponding to each coding block, to obtain first image data. The encoding device may determine, based on a quality parameter of each coding block in the first image data, a second QP corresponding to each coding block; and encode each coding block in the at least one coding block based on the second QP corresponding to each coding block, to obtain second image data. According to this method, the encoding device may adjust an encoding parameter QP of current encoding based on actual quality of previous encoding, to ensure quality of an encoded image.

In various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. An image encoding method, comprising:

   obtaining a first image, wherein the first image comprises at least one coding block;
   obtaining a first quantization parameter QP corresponding to each coding block in the at least one coding block;
   encoding each coding block in the at least one coding block based on the first QP corresponding to each coding block, to obtain first image data;
   determining, based on a quality parameter of each coding block in the first image data, a second QP corresponding to each coding block; and
   encoding each coding block in the at least one coding block based on the second QP corresponding to each coding block, to obtain second image data.

2. The method according to claim 1, wherein the determining, based on a quality parameter of each coding block in the first image data, a second QP corresponding to each coding block comprises:

   determining, based on a target quality parameter of the first image and a quality parameter of a first coding block in the first image data, a first QP offset value corresponding to the first coding block, wherein the first coding block is any coding block in the at least one coding block; and
   determining, based on a first QP corresponding to the first coding block and the first QP offset value corresponding to the first coding block, a second QP corresponding to the first coding block.

3. The method according to claim 2, wherein the determining, based on a target quality parameter of the first image and a quality parameter of a first coding block in the first image data, a first QP offset value corresponding to the first coding block comprises:

   when the quality parameter of the first coding block is greater than the target quality parameter of the first image, and a difference between the quality parameter of the first coding block and the target quality parameter of the first image falls within a first range, determining that the first QP offset value corresponding to the first coding block is equal to a QP offset value corresponding to the first range, wherein the first QP offset value corresponding to the first coding block is a positive number; or
   when the quality parameter of the first coding block is less than the target quality parameter of the first image, and an absolute value of a difference between the quality parameter of the first coding block and the target quality parameter of the first image falls within a second range, determining that an absolute value of the first QP offset value corresponding to the first coding block is equal to a QP offset value corresponding to the second range, wherein the first QP offset value corresponding to the first coding block is a negative number; or
   when the quality parameter of the first coding block is equal to the target quality parameter of the first image, determining that the first QP offset value corresponding to the first coding block is 0.

4. The method according to any one of claims 1 to 3, wherein after the encoding each coding block in the at least one coding block based on the first QP corresponding to each coding block, the method further comprises:
   comparing the first image data with the first image to obtain the quality parameter of each coding block in the first image data.

5. The method according to any one of claims 1 to 4, wherein the encoding each coding block in the at least one coding block based on the first QP corresponding to each coding block, to obtain first image data comprises:

   performing quantization processing on a second coding block based on a first QP corresponding to the second coding block, to obtain quantized data, wherein the second coding block is any coding block in the at least one coding block;

performing inverse quantization and inverse transform processing on the quantized data based on the first QP corresponding to the second coding block, to obtain inverse transformed residual data;

obtaining reconstructed data of the second coding block based on prediction data and the residual data of the second coding block; and

filtering the reconstructed data to obtain image data that is in the first image data and that corresponds to the second coding block.

6. The method according to any one of claims 1 to 5, wherein the encoding each coding block in the at least one coding block based on the second QP corresponding to each coding block comprises:

encoding a third coding block based on first information and a second QP corresponding to the third coding block, wherein the third coding block is any coding block in the at least one coding block, and
the first information comprises at least one of the following:

a prediction mode that is of the third coding block and that is determined when the third coding block is encoded based on a first QP corresponding to the third coding block; and
a motion vector that is of the third coding block and that is determined when the third coding block is encoded based on the first QP corresponding to the third coding block.

7. The method according to any one of claims 1 to 6, wherein after the encoding each coding block in the at least one coding block based on the second QP corresponding to each coding block, the method further comprises:
storing second information, wherein the second information indicates a quality parameter of each coding block in the second image data.

8. The method according to claim 7, wherein the second information is a matrix comprising the quality parameter of each coding block in the second image data.

9. The method according to claim 7 or 8, wherein the first image is an $n^{th}$ frame of image in a video, and n is a positive integer; and after the storing second information, the method further comprises:

obtaining a second image, wherein the second image is an $(n+1)^{th}$ frame of image in the video, the second image comprises N coding blocks, and N is a positive integer;
determining, in the at least one coding block, at least one target coding block associated with a fourth coding block in the second image, wherein the fourth coding block is any coding block in the N coding blocks, and content in the fourth coding block is comprised in the at least one target coding block;
determining a quality parameter of the at least one target coding block in the second image data based on the second information;
predicting a quality parameter of an encoded fourth coding block based on the quality parameter of the at least one target coding block;
determining, based on the predicted quality parameter of the encoded fourth coding block, a third QP corresponding to the fourth coding block; and
encoding the fourth coding block based on the third QP corresponding to the fourth coding block.

10. The method according to claim 9, wherein the determining, based on the predicted quality parameter of the encoded fourth coding block, a third QP corresponding to the fourth coding block comprises:

determining, based on a target quality parameter of the second image and the predicted quality parameter of the encoded fourth coding block, a second QP offset value corresponding to the fourth coding block; and
determining, based on the second QP offset value corresponding to the fourth coding block, the third QP corresponding to the fourth coding block.

11. The method according to claim 10, wherein the determining, based on a target quality parameter of the second image and the predicted quality parameter of the encoded fourth coding block, a second QP offset value corresponding to the fourth coding block comprises:

when the quality parameter of the fourth coding block is greater than the target quality parameter of the second image, and a difference between the quality parameter of the fourth coding block and the target quality parameter of the second image falls within a third range, determining that the second QP offset value corresponding to the fourth coding block is equal to a QP offset value corresponding to the third range, wherein the second QP offset value corresponding to the fourth coding block is a positive number; or

when the quality parameter of the fourth coding block is less than the target quality parameter of the second image, and an absolute value of a difference between the quality parameter of the fourth coding block and the target quality parameter of the second image falls within a fourth range, determining that an absolute value of the second QP offset value corresponding to the fourth coding block is equal to a QP offset value corresponding to the fourth range, wherein the second QP offset value corresponding to the fourth coding block is a negative number; or

when the predicted quality parameter of the encoded fourth coding block is equal to the target quality parameter of the second image, determining that the second QP offset value corresponding to the fourth coding block is 0.

12. The method according to any one of claims 1 to 11, wherein a quality parameter of any coding block comprises at least one of the following:

a peak signal to noise ratio, a structure similarity, or a multi-scale structure similarity.

13. An image encoding device, comprising a processor and a memory coupled to the processor, wherein the processor invokes program code stored in the memory to perform the method according to any one of claims 1 to 12.

14. A computer-readable storage medium, wherein the computer-readable storage medium stores a computer program, and when the computer program is run on a computer, the computer is enabled to perform the method according to any one of claims 1 to 12.

15. A chip, wherein the chip is coupled to a memory, and the chip reads a computer program stored in the memory to perform the method according to any one of claims 1 to 12.

FIG. 1

Code control module 20

Frame-level QP
Block-level ΔQP

Encoder 10

Statistics on
a quantity
of bits

Input image
Fn

Reference
image Fn−1

Intra
prediction
module 102

Inter
prediction
module 104

Mode decision
and residual
calculation
module 106

Residual

Transform and
quantization
module 108

Entropy
encoding
module 114

Output a
bitstream

Inverse quantization
and inverse transform
module 110

Reconstructed
image Fn

Filtering
module 112

EP 4 468 702 A1

FIG. 2

S301: Obtain a first image

↓

S302: Obtain a first QP corresponding to each coding block in at least one coding block in the first image

↓

S303: Encode each coding block in the at least one coding block based on the first QP corresponding to each coding block

↓

S304: Determine, based on a quality parameter of each coding block in first image data, a second QP corresponding to each coding block

↓

S305: Encode each coding block in the at least one coding block based on the second QP corresponding to each coding block

↓

S306: Store second information

↓

S307: Obtain a second image

↓

S308: Determine, in the at least one coding block in the first image, at least one target coding block associated with a fourth coding block in the second image

↓

S309: Determine a quality parameter of at least one target coding block in second image data based on the second information

↓

S310: Predict a quality parameter of an encoded fourth coding block based on the quality parameter of the at least one target coding block

↓

S311: Determine, based on the predicted quality parameter of the encoded fourth coding block, a third QP corresponding to the fourth coding block

↓

S312: Encode the fourth coding block based on the third QP corresponding to the fourth coding block

FIG. 3

Code control module 20

Frame-level QP
Block-level ΔQP

Frame-level QP
Block-level
ΔQP

Statistics
on a
quantity
of bits

Target
quality
parameter T

Reconstructed
data

First
image

First
encoder 31

QP
adjustment
module 33

ΔQP4a

Second
encoder
32

Output a
bitstream

FIG. 4

First image

Target quality
parameter T

Reconstructed
data

Calculate a
quality
parameter T1

T1

Calculate
ΔQP4a

ΔQP4a

FIG. 5

First image

Target quality
parameter T

Frame-level QP:
QP_frame1a
Block-level QP: ΔQPa

Reconstructed
data

Calculate a
quality
parameter T1

T1

Calculate
ΔQP4a

ΔQP4a

QP =
QP_frame1a +
ΔQPa + ΔQP4a

QP

FIG. 6

FIG. 7

Original data → Residual calculation unit 414 → Residual → Transform and quantization module 108-2 → Quantized data

QP → Transform and quantization module 108-2

Prediction data

Prediction mode and MV → Prediction unit 412

Prediction data

Quantized data

Reconstructed data ← Data calculation unit 416 ← Reconstructed residual ← Inverse quantization and inverse transform module 110-2

FIG. 8

FIG. 9

Code control module 20

Frame-level QP
Block-level ΔQP

Statistics on a quantity
of bits

Encoder 10

| Second image | | Intra prediction module 102 | Mode decision and residual calculation module 106 | Residual | Transform and quantization module 108 | Entropy encoding module 114 | Output a bitstream |

Quality matrix of the first image

First image

QP calculation module 116

Target quality parameter T

Inter prediction module 104

Inverse quantization and inverse transform module 110

Reconstructed image

Filtering module 112

Reconstruction quality calculation module 118

Quality matrix of the second image

FIG. 10

Second image    Target quality    Frame-level QP: QP_frame1b
                parameter T       Block-level QP: ΔQPb

First image
                    ┌──────────────┐         ┌──────────────┐         ┌────────────────────────┐
                    │ Predict a quality │  T3  │ Calculate │  ΔQP4b  │ QP = QP_frame1b + │   QP
Quality matrix of the │ parameter T3 │────────▶│ ΔQP4b │────────▶│ ΔQPb + ΔQP4b │────────▶
first image         └──────────────┘         └──────────────┘         └────────────────────────┘

FIG. 11

Current
coding block

Reference image

| | | | |
|---|---|---|---|
| BLK1 | BLK2 | BLK3 | BLK4 |
| BLK5 | BLK6 | BLK7 | BLK8 |
| BLK9 | BLK10 | BLK11 | BLK12 |
| BLK13 | BLK14 | BLK15 | BLK16 |

A

FIG. 12

Image encoding apparatus 1300

Obtaining unit 1301 —— Processing unit 1302

FIG. 13

Image encoding device 1400

Processor 1401

Bus 1403

Memory 1402

FIG. 14

## INTERNATIONAL SEARCH REPORT

| International application No. |
| --- |
| **PCT/CN2022/138979** |

**A.   CLASSIFICATION OF SUBJECT MATTER**

H04N19/154(2014.01)i

According to International Patent Classification (IPC) or to both national classification and IPC

**B.   FIELDS SEARCHED**

Minimum documentation searched (classification system followed by classification symbols)

IPC:  H04N

Documentation searched other than minimum documentation to the extent that such documents are included in the fields searched

Electronic data base consulted during the international search (name of data base and, where practicable, search terms used)

CNABS, CNTXT, CNKI, VEN, EPTXT, WOTXT, USTXT: 编码, 二次编码, 重编码, 宏块, 编码块, 块级, 量化, 量化参数, 质量参数, 调整, code, block, quantization, QR, PSNR, quality, adjust

**C.   DOCUMENTS CONSIDERED TO BE RELEVANT**

| Category* | Citation of document, with indication, where appropriate, of the relevant passages | Relevant to claim No. |
| --- | --- | --- |
| X | CN 108574841 A (BEIJING KINGSOFT CLOUD NETWORK TECHNIQUE CO., LTD. et al.) 25 September 2018 (2018-09-25) description, paragraphs 80-153 | 1, 2, 4-8, 12-15 |
| A | CN 108769693 A (CITRIX SYSTEMS INC.) 06 November 2018 (2018-11-06) entire document | 1-15 |
| A | US 2008260042 A1 (QUALCOMM INC.) 23 October 2008 (2008-10-23) entire document | 1-15 |
| A | US 2021120230 A1 (SZ DJI TECHNOLOGY CO., LTD.) 22 April 2021 (2021-04-22) entire document | 1-15 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 July 2023** | **28 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/138979**

| Patent document cited in search report | | | Publication date (day/month/year) | Patent family member(s) | | | Publication date (day/month/year) |
|---|---|---|---|---|---|---|---|
| CN | 108574841 | A | 25 September 2018 | None | | | |
| CN | 108769693 | A | 06 November 2018 | WO | 2012170910 | A1 | 13 December 2012 |
| | | | | US | 2017214918 | A1 | 27 July 2017 |
| | | | | US | 10123015 | B2 | 06 November 2018 |
| | | | | US | 2012314764 | A1 | 13 December 2012 |
| | | | | US | 9621896 | B2 | 11 April 2017 |
| | | | | EP | 2719178 | A1 | 16 April 2014 |
| | | | | EP | 2719178 | B1 | 16 February 2022 |
| US | 2008260042 | A1 | 23 October 2008 | US | 8582647 | B2 | 12 November 2013 |
| | | | | WO | 2008133677 | A1 | 06 November 2008 |
| | | | | EP | 2153657 | A1 | 17 February 2010 |
| | | | | EP | 2153657 | B1 | 19 June 2019 |
| | | | | US | 2014177703 | A1 | 26 June 2014 |
| | | | | JP | 2010525739 | A | 22 July 2010 |
| | | | | JP | 5113244 | B2 | 09 January 2013 |
| | | | | KR | 20100005224 | A | 14 January 2010 |
| | | | | KR | 101104654 | B1 | 13 January 2012 |
| US | 2021120230 | A1 | 22 April 2021 | WO | 2020019180 | A1 | 30 January 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210255919X